# EUROPÄISCHE PATENTSCHRIFT

(11) **EP 3 511 886 B1**
(45) Veröffentlichungstag und Bekanntmachung des Hinweises auf die Patenterteilung: **22.10.2025**
(21) Anmeldenummer: 19151185.6
(22) Anmeldetag: 10.01.2019
(51) Int. Cl.: G06Q 10/08, B60P 3/00

(54) **LIEFERFAHRZEUG ZUM BELIEFERN EINES SENDUNGSKASTENS MIT SENDUNGEN UND SENDUNGSKASTEN ZUM AUFNEHMEN, SPEICHERN UND WIEDERABGEBEN VON SENDUNGEN**
DELIVERY VEHICLE FOR DELIVERING A SHIPPING BOX WITH SHIPMENT AND SHIPPING BOX FOR RECEIVING, STORING AND RETURNING SHIPMENTS
VÉHICULE DE LIVRAISON DESTINÉ À LA LIVRAISON D'UNE BOÎTE D'EXPÉDITION COMPORTANT DES EXPÉDITIONS ET BOÎTE D'EXPÉDITION DESTINÉE À LA RÉCEPTION, AU STOCKAGE ET À LA DISTRIBUTION D'EXPÉDITIONS

(30) Priorität: 10.01.2018 DE 102018100447
(43) Veröffentlichungstag der Anmeldung: 17.07.2019
(73) Patentinhaber: Deutsche Post AG, 53113 Bonn (DE)
(72) Erfinder: DAUTZ, Christoph, 53225 Bonn (DE); VON GOSTOMSKI, Markus, 53127 Bonn (DE); MARKERT, Florian, 53227 Bonn (DE); QUILL, Jasmin, 52064 Aachen (DE)
(74) Vertreter: Cohausz & Florack

(56) Entgegenhaltungen:
- EP-A1- 2 944 512
- EP-A1- 3 121 775
- WO-A1-2012/083057
- WO-A1-2016/144254
- WO-A1-2017/041145
- WO-A1-2017/085316
- WO-A2-2014/080389
- CN-A- 107 055 030
- DE-A1- 19 809 291
- DE-U1- 202016 005 621
- JP-A- 2002 142 960
- JP-B1- 6 164 599
- US-A- 4 193 511
- US-A1- 2007 125 727
- US-A1- 2015 186 840
- US-A1- 2016 235 236
- US-B1- 7 182 246

## Beschreibung

### Gebiet

Die Erfindung betrifft ein Lieferfahrzeug mit einem Sendungsspeicher zum Aufnehmen, Speichern und Wiederabgeben von Sendungen, mit einer Übergabeeinrichtung zum Übergeben von Sendungen vom Sendungsspeicher an eine Verschiebeeinrichtung und mit einer Steuereinrichtung zur Steuerung wenigstens der Verschiebeeinrichtung. Ferner betrifft die Erfindung einen Sendungskasten zur Aufnahme und zum Bereithalten von Sendungen für deren separate Abholung mit einer Mehrzahl von wenigstens in einer Reihe nebeneinander angeordneten Sendungsfächern jeweils zur Aufnahme wenigstens einer Sendung, wobei wenigstens im Wesentlichen jedes Sendungsfach eine vordere Öffnung aufweist, wobei wenigstens im Wesentlichen jedem Sendungsfach ein zwischen einer die vordere Öffnung zum Entnehmen der Sendung aus dem Sendungsfach freigebenden Entnahmestellung und einer die vordere Öffnung verschließenden Schließstellung verstellbares vorderes Verschlussmittel zugeordnet ist. Darüber hinaus betrifft die Erfindung ein Verfahren zum Abliefern von Sendungen durch ein solches Lieferfahrzeug in einen solchen Sendungskasten.

### Hintergrund

Lieferfahrzeuge zum Ausliefern oder Zustellen von Sendungen sind in unterschiedlichen Ausgestaltungen bereits bekannt. Sie weisen wenigstens einen Sendungsspeicher auf, in dem die auszuliefernden Sendungen an einem Beladeort des Lieferfahrzeugs zunächst aufgenommen und bis zur Auslieferung oder Zustellung zwischengespeichert werden. Viele Lieferfahrzeuge werden händisch beladen und auch wieder händisch entladen. Es besteht jedoch ein Bestreben, mehr Sendungen in einem Sendungsspeicher aufnehmen zu können, weshalb in einigen Fällen auf ein händisches Entladen verzichtet wird. Zudem wird bedarfsweise ein Abliefern der Sendungen ohne ein händisches Eingreifen bevorzugt. Dann werden die Sendungen von dem Sendungsspeicher über eine Übergabeeinrichtung ausgegeben, die die Sendungen an eine Ausgabeeinrichtung übergibt, welche letztlich das Ausgeben der Sendungen bewirkt. Bei der Ausgabeeinrichtung kann es sich beispielsweise um eine Verschiebeeinrichtung handeln, die die Sendungen aus dem Lieferfahrzeug herausschiebt. Das Verschieben der Verschiebeeinrichtung wird dabei der Einfachheit halber von einer Steuereinrichtung gesteuert, so dass die gewünschten Sendungen in gewünschter Weise abgeliefert oder zugestellt werden.

Des Weiteren sind Sendungskästen, etwa in Form von Paketkästen oder Packstationen, bekannt, die Sendungen aufnehmen und bis zu deren Abholung in separaten Sendungsfächern bereithalten können. Diese Sendungskästen weisen Sendungsfächer auf, die in mehreren Reihen übereinander angeordnet sind. Die benachbarten Sendungsfächer der einzelnen Reihen sind typischerweise durch eine gemeinsame Seitenwand voneinander abgegrenzt. Um die Sendungen in die Sendungsfächer einlegen und wieder aus den Sendungsfächern entnehmen zu können, weisen die Sendungsfächer jeweils eine vordere Öffnung auf, wobei vorne der Vorderseite des Sendungskastens entspricht. Damit die Sendungen zudem nur von befugten Personen entnommen werden können, sind den Sendungsfächern noch vordere Verschlussmittel zugeordnet, die jeweils von einer die Entnahme einer Sendung freigebenden Entnahmestellung in eine die vordere Öffnung verschließende Schließstellung und zurück verstellt werden können.

So offenbaren DE 198 09 291 A1 und WO 2014/080389 A2 einen Sendungskasten zur Aufnahme und zum Bereithalten von Sendungen für deren separate Abholung, der seitlich beladen werden kann, wobei dieser in der DE 198 09 291 A1 als mobiler Sendungskasten ausgebildet ist. JP 2002 142960 A offenbart einen Sendungskasten mit einem einzelnen Sendungsfach, welcher ein internes Rolltor beinhalten kann, um den Zugriff von außen auf bereits angelieferte Sendungen zu verhindern.

Wenn Sendungen in den Sendungskasten eingelegt werden, wird zunächst durch eine Steuereinrichtung des Sendungskastens wenigstens ein vorderes Verschlussmittel entriegelt. Das vordere Verschlussmittel kann nun in die Entnahmestellung verstellt und die Sendung in das zugehörige Sendungsfach eingelegt werden. Sodann wird das vordere Verschlussmittel wieder in die Schließstellung verstellt und das Verschlussmittel verriegelt. Darüber hinaus wird dem Sendungskasten eine Information darüber mitgeteilt, welche Sendung in dem entsprechenden Sendungsfach hinterlegt worden ist. So kann einem Abholer einer bestimmten Sendung nach einer entsprechenden Authentifizierung am Sendungskasten das der Sendung zugeordnete Sendungsfach durch Entriegeln und Verstellen des zugeordneten vorderen Verschlussmittels in die Entnahmestellung geöffnet werden. Der Abholer entnimmt die Sendung und verstellt das vordere Verschlussmittel wieder in die Schließstellung.

Zum Füllen der Sendungsfächer kann grundsätzlich auch ein Lieferfahrzeug verwendet werden, wenn dieses in der Lage ist, Sendungen aus dem Sendungsspeicher zu entnehmen und in den Sendungsfächern durch die geöffneten vorderen Verschlussmittel abzulegen. Dies ist jedoch recht aufwendig und blockiert den Sendungskasten über eine erhebliche Zeitspanne, in der keine Sendungen von Abholern abgeholt werden können.

### Zusammenfassung einiger beispielhafter Ausführungsformen der Erfindung

Der vorliegenden Erfindung liegt die Aufgabe zugrunde, das Lieferfahrzeug, den Sendungskasten und das Verfahren jeweils der eingangs genannten und zuvor näher erläuterten Art derart auszugestalten und weiterzubilden, dass das Füllen der Sendungsfächer eines Sendungskastens einfacher durchgeführt werden kann, ohne dabei das Entnehmen von Sendungen über einen längeren Zeitraum zu behindern.

Diese Aufgabe ist bei einem Lieferfahrzeug nach dem Oberbegriff von Anspruch 1 dadurch gelöst, dass die Verschiebeeinrichtung zum Abliefern von Sendungen an einem Ort außerhalb des Lieferfahrzeugs durch Verschieben der Sendungen und von einer eingezogenen Stellung in eine ausgeschobene Stellung und zurück verstellbar ausgebildet ist und dass die Verschiebeeinrichtung zum Abliefern von Sendungen auf unterschiedlichen Höhenniveaus außerhalb des Lieferfahrzeugs höhenverstellbar ausgebildet ist.

Die Erfindung hat erkannt, dass durch eine Verschiebeeinrichtung, die von einer eingezogenen Stellung in eine ausgeschobene Stellung und zurück verstellt werden kann, Sendungen zweckmäßig außerhalb des Lieferfahrzeugs abgeliefert werden können. Zu diesem Zweck werden die Sendungen außerhalb des Lieferfahrzeugs verschoben. Die Verschiebeeinrichtung kann so beispielsweise die Sendungen gerade so weit außerhalb des Lieferwagens verschieben, bis die Sendungen an den gewünschten Ort, insbesondere in das gewünschte Sendungsfach, gelangen. Um sehr viele unterschiedliche Sendungsfächer mit Sendungen belegen zu können, ist die Verschiebeeinrichtung zudem höhenverstellbar ausgebildet. Die Sendungsfächer müssen dann nicht auf einem bestimmten Höhenniveau und bedarfsweise auf unterschiedlichen Höhenniveaus angeordnet sein. Die Sendungsfächer lassen sich dann trotzdem von der Verschiebeeinrichtung bedienen bzw. mit Sendungen belegen.

Bei dem entsprechenden Lieferfahrzeug kann es sich bedarfsweise um ein Zustellfahrzeug handeln. Auch Zustellfahrzeuge dienen dem Abliefern von Sendungen. Je nach Art der Sendungen kann aber zwischen einem Abliefern und einem Zustellen unterschieden werden. Insbesondere in den Fällen, in denen auf eine bestimmte Sendung nur ein berechtigter Abholer Zugriff haben soll, wie dies beispielsweise bei Paketen oder Päckchen der Fall ist, spricht man eher von einer Zustellung als von einer Lieferung. Anders ausgedrückt werden typischerweise Sendungen, insbesondere Postsendungen, wie Paketsendungen, Briefsendungen und/oder Printprodukte, etwa von einem Postunternehmen, an ihrem Bestimmungsort zugestellt, während andere Sendungen oft von Lieferdiensten abgeliefert werden. Die Grenzen zwischen dem Liefern und dem Zustellen sind eher fließend. Auch spielt diese Grenze für die vorliegende Erfindung eine eher untergeordnete Rolle. Demnach erscheint es vorliegend nicht erforderlich, die Grenze zwischen Zustellung und Lieferung abschließend und über das Vorbeschriebene hinaus zu definieren.

Vorliegend werden unter Sendungen grundsätzlich unterschiedliche Gegenstände verstanden, die vorzugsweise mit überschaubarem Aufwand transportiert werden können. Insbesondere können die Sendungen als Stückgut vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Sendungen eines Postunternehmens, die als Postsendungen bezeichnet werden können. Bedarfsweise handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können. Zudem kann eine Briefsendung neben einem Brief auch eine Postkarte sein. Bei Paketsendungen und anderen Sendungen handelt es sich in vielen Fällen um umverpackte Güter, wobei dann die Sendung die Verpackung und das darin verpackte Gut umfassen.

Die genannte Aufgabe ist ferner durch einen Sendungskasten nach dem Oberbegriff von Anspruch 6 dadurch gelöst, dass wenigstens im Wesentlichen jedes Sendungsfach wenigstens eine seitliche Öffnung aufweist, dass wenigstens im Wesentlichen jedem Sendungsfach wenigstens ein zwischen einer das wenigstens eine Sendungsfach seitlich verschließenden Verschlussstellung in eine das seitliche Einschieben einer Sendung freigebende Verschiebestellung verstellbares seitliches Verschlussmittel zugeordnet ist und dass die seitlichen Verschlussmittel wenigstens im Wesentlichen elektrisch angetrieben sind.

Die Erfindung hat weiterhin erkannt, dass sich ein Sendungskasten sehr zweckmäßig von der Seite mit Sendungen beschicken lässt, wenn wenigstens im Wesentlichen jedes Sendungsfach wenigstens einer Reihe von nebeneinander angeordneten Sendungsfächern wenigstens eine seitliche Öffnung aufweist. Grundsätzlich kann jedes Sendungsfach, das eine seitliche Öffnung aufweist, über diese auch mit einer Sendung versorgt werden. Wenn wenigstens einzelne Sendungsfächer zwei gegenüberliegende seitliche Öffnungen aufweisen, lassen sich diese Sendungsfächer bedarfsweise von beiden einander gegenüberliegenden Seiten mit einer Sendung beladen. Die Seite, von der die Beladung der Sendungsfächer erfolgt, kann dann abhängig von der Zugänglichkeit der Sendungsfächer für die Aufnahme wenigstens einer Sendung genutzt werden.

Damit einem Abholer nur zu den Sendungen Zugang eingeräumt wird, die auch für die Abholung durch den entsprechenden Abholer bestimmt sind, lassen sich wenigstens im Wesentlichen alle seitlichen Öffnungen durch seitliche Verschlussmittel verschließen. Zu diesem Zweck können die seitlichen Verschlussmittel von einer das wenigstens eine Sendungsfach seitlich verschließenden Verschlussstellung in eine das seitliche Einschieben einer Sendung freigebende Verschiebestellung verstellt werden. Je nach der Stellung der Verschlussmittel kann von der Seite eine Sendung in ein Sendungsfach eingeschoben oder aber die unberechtigte Entnahme einer Sendung verhindert werden. Da sichergestellt werden muss, dass sich stets wenigstens im Wesentlichen alle seitlichen Verschlussmittel in der gewünschten Stellung befinden oder in die jeweils gewünschte Stellung verstellt werden, sind die seitlichen Verschlussmittel vorzugsweise elektrisch angetrieben. So lässt sich beispielsweise eine zweckmäßige Steuerung des Sendungskastens über eine Steuereinrichtung des Sendungskastens erreichen.

Die Steuereinrichtung kann vorzugsweise ebenfalls Anforderungsinformationen empfangen, die anzeigen, welche Sendung von einem autorisierten Abholer abgeholt werden soll oder welches vordere Verschlussmittel zur Abholung einer bestimmten Sendung von einer Schließstellung in eine Entnahmestellung verstellt werden soll. Die Steuereinrichtung kann zudem eine Autorisierung des Abholers prüfen. Dazu wird beispielsweise ein Code übermittelt, mit dem er sich als berechtigt für die Entnahme einer Sendung ausweisen kann. Der Code kann zudem direkt mit einem Sendungsfach verknüpft sein, so dass die Steuereinrichtung anhand des Codes erkennt, welches vordere Verschlussmittel für die Entnahme einer Sendung von der Schließstellung in die Entnahmestellung verstellt werden muss. Die Steuereinrichtung kann dies dann bewirken und/oder initiieren. Zu diesem Zweck kann das entsprechende vordere Verschlussmittel entriegelt werden, so dass der Abholer das vordere Verschlussmittel in die Entnahmestellung verstellen kann, um die Sendung aus dem dahinter liegenden Sendungsfach zu entnehmen. Es kann aber auch das entsprechende Verschlussmittel über einen elektrischen Antrieb gesteuert von der Steuerungseinrichtung in die Entnahmestellung verstellt werden. Ein zusätzliches Entriegeln kann dann bedarfsweise entbehrlich sein, wenn der elektrische Antrieb ein unbefugtes Öffnen der vorderen Verschlussmittel dauerhaft verhindert. Es kann aber bedarfsweise auch auf einen elektrischen Antrieb verzichtet werden, wenn der Bediener das vordere Verschlussmittel nach dem Entriegeln händisch verstellt. Dabei kann etwa das Öffnen des vorderen Verschlussmittels federunterstützt erfolgen.

Die zuvor genannte Aufgabe ist des Weiteren auch gemäß Anspruch 11 gelöst durch ein Verfahren zum Abliefern von Sendungen durch ein Lieferfahrzeug, vorzugsweise nach einem der Ansprüche 1 bis 5, in einen Sendungskasten, vorzugsweise nach einem der Ansprüche 6 bis 9, wobei der Sendungskasten wenigstens eine Reihe von nebeneinander angeordneten Sendungsfächern zur Aufnahme wenigstens einer Sendung aufweist,
- bei dem das Lieferfahrzeug seitlich neben dem Sendungskasten hält,
- bei dem eine Steuereinrichtung wenigstens ein seitliches wenigstens einem Sendungsflach zugeordnetes Verschlussmittel ansteuert,
- bei dem das Ansteuern des Verschlussmittels in Abhängigkeit der Verteilung der mit Sendungen belegten Sendungsfächer und zum Verstellen des Verschlussmittels von einer eine seitliche Öffnung des wenigstens einen Sendungsfachs verschließenden Verschlussstellung in eine die seitliche Öffnung freigebende Verschiebestellung erfolgt und
- bei dem eine Steuereinrichtung des Lieferfahrzeugs wenigstens eine Verschiebeeinrichtung zum Verschieben einer Sendung in ein Sendungsfach mit geöffneter seitlicher Öffnung ansteuert.

Die Beschickung von Sendungskästen durch Lieferfahrzeuge kann schnell und effektiv erfolgen, ohne dass die Vorderseite der Sendungskästen durch das Lieferfahrzeug blockiert wird, so dass einem Abholer der Zugang zu dem entsprechenden Sendungsfach verwehrt sein kann. Das Lieferfahrzeug kann nämlich seitlich neben dem Sendungskasten halten. Beim Beladen eines Sendungskastens muss berücksichtigt werden, dass der Sendungskasten noch nicht abgeholte Sendungen in einzelnen Sendungsfächern aufweisen kann, die beliebig über den Sendungskasten verteilt sein können. Mithin ist eine Steuereinrichtung vorgesehen, die die Beladung anhand der Verteilung der mit Sendungen belegten Sendungsfächer steuert. Die Steuereinrichtung ist dabei der Einfachheit halber Teil des Sendungskastens. Die Steuereinrichtung kann aber auch außerhalb des Sendungskastens vorgesehen sein. Dann bietet es sich weiter an, wenn die Steuereinrichtung mit dem Sendungskasten kommuniziert. Die Steuereinrichtung steuert wenigstens ein seitliches wenigstens einem Sendungsfach zugeordnetes Verschlussmittel zum Verstellen von einer eine seitliche Öffnung des wenigstens einen Sendungsfachs verschließenden Verschlussstellung in eine die seitliche Öffnung freigebende Verschiebestellung an. So werden die seitlichen Verschlussmittel geöffnet, die zum Beladen von Sendungsfächern des Sendungskastens von der Seite die entsprechenden Öffnungen freigeben müssen. Sodann kann eine Steuereinrichtung, insbesondere des Lieferfahrzeugs, wenigstens eine Verschiebeeinrichtung zum Verschieben einer Sendung ansteuern, um die Sendung in eines der seitlich geöffneten Sendungsfächer einzuschieben.

Der besseren Verständlichkeit halber und zur Vermeidung von unnötigen Wiederholungen werden nachfolgend das Lieferfahrzeug, der Sendungskasten und das Verfahren gemeinsam beschrieben, ohne jeweils im Einzelnen zwischen dem Lieferfahrzeug, dem Sendungskasten und dem Verfahren zu unterscheiden. Für den Fachmann ist jedoch anhand des Kontextes ersichtlich, welches Merkmal jeweils hinsichtlich des Lieferwagens, des Sendungskastens und des Verfahrens besonders bevorzugt ist.

Bei einer ersten besonders bevorzugten Ausgestaltung des Lieferfahrzeugs ist die Steuereinrichtung zur Steuerung des Sendungsspeichers und/oder der Übergabeeinrichtung ausgebildet. Dann ist der Sendungsspeicher und/oder die Übergabeeinrichtung bedarfsweise ohne händisches Eingreifen steuerbar. So kann beispielsweise über die Steuereinrichtung sichergestellt werden, dass die als nächstes abzuliefernde Sendung von dem Sendungsspeicher ausgegeben wird und/oder die als nächstes abzuliefernde Sendung von der Übergabeeinrichtung weiter an die Verschiebeeinrichtung geleitet wird. Letztlich können so die Sendungen einzeln und in einer bestimmten Reihenfolge abgeliefert werden, wobei vorzugsweise der Steuerungseinrichtung immer bekannt ist, welche individuelle Sendung gerade und/oder als nächstes abgeliefert wird.

Wenn das Lieferfahrzeug als autonomes Lieferfahrzeug zum autonomen Abliefern von Sendungen an einem Lieferort ausgebildet ist, bedarf das Abliefern keines händischen Eingreifens. Dies hat den Vorteil, dass menschliche Fehler beim Abliefern von Sendungen vermieden werden können, und dass das Abliefern höchst effektiv nach vorgegebenen Prinzipien erfolgen kann. Alternativ oder zusätzlich kann die Effizienz des Ablieferns von Sendungen gesteigert werden, wenn das Lieferfahrzeug als autonomes Lieferfahrzeug zum autonomen Anfahren eines Lieferorts ausgehend von einem Beladeort des Lieferfahrzeugs ausgebildet ist. Dann kann bedarfsweise gänzlich auf einen Bediener oder Auslieferer verzichtet werden oder dieser lediglich zu Überwachungszwecken eingesetzt werden. Zudem verbleibt dem Bediener oder Auslieferer so bedarfsweise noch Zeit, um weitere Aufgaben von unterwegs zu übernehmen.

Damit die Verschiebeeinrichtung das Verfahren des Lieferfahrzeugs von einem Sendungskasten zu einem anderen Sendungskasten oder von einem Beladeort zu einem Entladeort nicht behindert, ist es bevorzugt, wenn die Verschiebeeinrichtung in einer eingezogenen Stellung vollständig im Lieferfahrzeug angeordnet ist. Um die Sendungen aber zuverlässig und zielsicher nach außerhalb des Lieferfahrzeugs abliefern zu können, insbesondere in ein Sendungsfach eines Sendungskastens einschieben zu können, kann die Verschiebeeinrichtung eine in der ausgeschobenen Stellung wenigstens teilweise außerhalb des Lieferfahrzeugs angeordnete Stempeleinheit zum Verschieben der Sendungen aufweisen. Über die Stempeleinheit kann die Sendung verschoben werden, indem die Stempeleinheit ausgefahren wird.

Dabei kann die Sendung aus dem Lieferfahrzeug herausgeschoben werden oder lediglich außerhalb des Lieferfahrzeugs verschoben werden. Die zuerst genannte Alternative erscheint jedoch der Einfachheit halber besonders bevorzugt zu sein.

Um die Sendung wenigstens abschnittsweise während des Verschiebens durch die Verschiebeeinrichtung zu stützen, kann die Verschiebeeinrichtung, insbesondere unterhalb der Stempeleinheit, eine von einer Nichtgebrauchsstellung in eine Gebrauchsstellung und zurück verstellbare, insbesondere schwenkbare oder verfahrbare, Rampe aufweisen. So kann die abzuliefernde Sendung beispielsweise auf der Rampe liegen und von der Stempeleinheit entlang der Rampe verschoben werden. Da die Sendung durch die Verschiebeeinrichtung außerhalb des Lieferfahrzeugs abgeliefert werden soll, ist es besonders zweckmäßig, wenn die Rampe zum Stützen einer durch die Verschiebeeinrichtung zu verschiebende Sendung wenigstens abschnittsweise außerhalb des Lieferfahrzeugs ausgebildet ist.

Einfach und zuverlässig ist es zudem, wenn die Verschiebeeinrichtung, insbesondere die Stempeleinheit, zum wenigstens im Wesentlichen linearen Verschieben einer Sendung ausgebildet ist. Um die Sendungen zuverlässig auf unterschiedlichen Höhenniveaus außerhalb des Lieferfahrzeugs abliefern zu können, kann die Rampe höhenverstellbar ausgebildet sein.

Um den Raum des Lieferfahrzeugs effektiv nutzen zu können, und möglichst viele Sendungen im Sendungsspeicher aufnehmen zu können, kann die Stempeleinheit zwischen der Nichtgebrauchsstellung und der Gebrauchsstellung teleskopierbar ausgebildet sein. Diese Teleskopierbarkeit lässt sich zudem in konstruktiv einfacher Weise erreichen, wenn die Stempeleinheit wenigstens zwei gegeneinander zusammenschiebbare und ausziehbare, vorzugsweise zylindrische, Teleskopelemente umfasst. Dabei kann wenigstens ein Teleskopelement wenigstens abschnittsweise in wenigstens einem anderen Teleskopelement aufgenommen sein. Beim Zusammenschieben der Stempeleinheit kann dann das wenigstens eine Teleskopelement in das wenigstens eine andere Teleskopelement eingeschoben werden. Es kann aber auch vorgesehen sein, dass die Teleskopelemente nebeneinander angeordnet und gegeneinander verschiebbar sind. Der weiteren Vereinfachung halber greifen die Teleskopelemente dann teilweise ineinander ein. Diese Abschnitte können weiter vorzugsweise eine Art Schienensystem bilden.

Wenn die Übergabeeinrichtung wenigstens ein, insbesondere höhenverstellbares, Förderband aufweist, können die Sendungen sehr einfach und zuverlässig an die Verschiebeeinrichtung weitergegeben werden. Alternativ oder zusätzlich kann hierzu aber auch wenigstens ein Roboterarm und/oder wenigstens ein Portalroboter vorgesehen sein. All diese Einrichtungen können zum Fördern der Sendungen in Richtung der Verschiebeeinrichtung genutzt werden. Wenn die Übergabeeinrichtung zudem eine Vereinzelungseinrichtung aufweist, kann sichergestellt werden, dass immer eine Sendung nach der nächsten abgeliefert wird. Der Einfachheit halber ist die Vereinzelungseinrichtung in Form eines Förderbands, bedarfsweise Beschleunigungsförderbands, und/oder eines von einer Nichtgebrauchsstellung in eine Gebrauchsstellung in Anlage an wenigstens einer Sendung und zurück verstellbares Separierungsschwert ausgebildet. Wenn das Separierungsschwert in der Gebrauchsstellung ist, werden weitere Sendungen durch Anlage an dem Separierungsschwert aufgehalten. Wenn das Separierungsschwert in der Nichtgebrauchsstellung ist, sind die anstehenden Sendungen zum weiteren Transport freigegeben.

Insbesondere im Falle von autonomen Lieferfahrzeugen weisen diese vorzugsweise wenigstens einen Sensor zum Erfassen eines Sendungskastens zum Abliefern von Sendungen in dem Sendungskasten auf. Es kann sich dabei um einen optischen Sensor handeln. Der Sensor ermöglicht es dem Lieferfahrzeug, selbstständig bis unmittelbar neben den Sendungskasten zu fahren ohne mit diesem zu kollidieren. Vorzugsweise kann das Lieferfahrzeug so eine vordefinierte Relativposition zum Sendungskasten einnehmen. Alternativ oder zusätzlich kann das Lieferfahrzeug auch wenigstens einen Sensor zum Erfassen eines Höhenniveaus für das Abliefern von Sendungen durch die Verschiebeeinrichtung aufweisen, etwa als Höhenniveau einer Reihe von Sendungsfächern eines Sendungskastens. So kann der Sensor ermittelt, wie weit die Verschiebeeinrichtung, die Rampe, die Stempeleinheit und/oder die Übergabeeinrichtung nach oben oder unten verstellt werden muss, etwa um auf das Höhenniveau einer Reihe von Sendungsfächern eines Sendungskastens zu gelangen. Der Sensor kann aber auch erfassen, ob die Verschiebeeinrichtung, die Rampe, die Stempeleinheit und/oder die Übergabeeinrichtung die gewünschte Position erreicht hat oder nicht. Grundsätzlich könnte auch der Sendungskasten einen entsprechenden Sensor umfassen und das Lieferfahrzeug dann entsprechende Steuerbefehle zur Höhenverstellung der Verschiebeeinrichtung, der Rampe, der Stempeleinheit und/oder der Übergabeeinrichtung erhalten. Es kann sich hier auch um denselben Sensor handeln wie den Sensor zum Erkennen des Sendungskastens. So kann das Lieferfahrzeug die Höhenverstellung der Verschiebeeinrichtung an das erfasste Höhenniveau des Sendungskastens anpassen, wobei es sich um ein Höhenniveau wenigstens eines Sendungsfachs oder einer Reihe von Sendungsfächern handeln kann.

Wenn wenigstens ein Sensor zum Erfassen der Stellung der Verschiebeeinrichtung, insbesondere der Stempeleinheit, beim Abliefern der Sendungen vorgesehen ist, weiß das Lieferfahrzeug, wann die Sendung die gewünschte Position bzw. das gewünschte Sendungsfach im Sendungskasten erreicht hat und kann das Lieferfahrzeug die entsprechende Information bedarfsweise an den Sendungskasten weiterleiten. Wenn wenigstens eine Empfangseinrichtung zum Empfangen einer Information betreffend den Ort der Ablieferung wenigstens einer Sendung, insbesondere betreffend ein Höhenniveau und/oder einer Verschiebestrecke vorgesehen ist, kann das Abliefern der Sendungen durch das Lieferfahrzeug gezielt gesteuert und an die jeweilige Beladesituation eines Sendungskastens angepasst werden. Alternativ oder zusätzlich kann das Lieferfahrzeug auch eine Sendeeinrichtung zum Senden einer Information betreffend die erfolgte Ablieferung einer Sendung umfassen, um etwa den Sendungskasten über das erfolgte Abliefern einer Sendung zu informieren. Besonders effektiv kann es grundsätzlich sein, wenn Informationen beispielsweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), übertragen werden. Andere Wege der Kommunikation sind bekannt und können grundsätzlich auch genutzt werden.

Bei einer ersten besonders bevorzugten Ausgestaltung des Sendungskastens sind die vorderen Verschlussmittel wenigstens im Wesentlichen jeweils als schwenkbare Klappe ausgebildet. Das Schwenken kann bedarfsweise in vertikaler oder in horizontaler Richtung erfolgen. Dabei ist es der Einfachheit halber besonders bevorzugt, wenn alle vorderen Verschlussmittel gleichartig ausgebildet sind. Zwingend erforderlich ist dies jedoch nicht. Die vorderen Verschlussmittel als schwenkbare Klappen auszubilden ermöglicht ein einfaches Entriegeln und Öffnen der vorderen Verschlussmittel. Außerdem sind Klappen recht stabil und langlebig, was einer zuverlässigen Nutzung des Sendungskastens entgegenkommt. Alternativ oder zusätzlich können die vorderen Verschlussmittel wenigstens im Wesentlichen jeweils genau einem Sendungsfach zugeordnet sein. Dann kann der Zugang zu bestimmten Sendungen sehr zuverlässig gewährleistet werden, ohne dass Abholer auf andere Sendungen Zugriff haben.

Die seitlichen Verschlussmittel können alle oder wenigstens überwiegend wenigstens im Wesentlichen in einer Richtung senkrecht zur wenigstens einen Reihe von Sendungsfächern zwischen der Verschlussstellung und der Verschiebestellung verstellbar ausgebildet sein. Auf diese Weise geben die seitlichen Verschlussmittel in der Verschiebestellung die seitlichen Öffnungen der Sendungsfächer für das Einschieben von Sendungen frei, so dass das Einschieben von Sendungen in die Sendungsfächer sehr zuverlässig erfolgen kann. Dies gilt insbesondere für den Fall, wenn eine Sendung durch eine oder mehrere Sendungsfächer hindurch in ein dahinter liegendes Sendungsfach eingeschoben werden soll. Besonders zweckmäßig ist es, wenn die seitlichen Verschlussmittel wenigstens im Wesentlichen jedes Sendungsfachs einer Reihe von Sendungsfächern als Rolltor ausgebildet sind. Rolltore lassen sich sehr einfach und zuverlässig senkrecht zur Reihe von Sendungsfächern verstellen und geben zudem die seitlichen Öffnungen bedarfsweise in Gänze zum Einschieben von Sendungen frei. Zudem können so sehr große seitliche Öffnungen realisiert werden, wenn ein Rolltor wenigstens im Wesentlichen eine Seitenwand eines Sendungsfachs bildet.

Wenn die Sendungsfächer in wenigstens zwei übereinander angeordneten Reihen von nebeneinander angeordneten Sendungsfächern angeordnet sind, können mehr Sendungen im Sendungskasten aufgenommen werden. Zudem ist dann das Einbringen von Sendungen in die Sendungsfächer weiter sehr einfach möglich. Dabei können wenigstens in einem Fall zwei übereinander angeordneten Sendungsfächern ein gemeinsames seitlichen Verschlussmittel zugeordnet sein, was besonders einfach erfolgen kann, wenn die seitlichen Verschlussmittel als Rolltor ausgebildet sind. Es müssen dann lediglich die Länge des Rolltors und die Seitenwände der übereinander angeordneten Sendungsfächer angepasst werden. Die entsprechende Verwendung von Rolltoren kann zudem die Verwendung sehr vieler übereinander angeordneter Reihen von Sendungsfächern ermöglichen.

Werden die Sendungsfächer einer gemeinsamen Reihe von nebeneinander angeordneten Sendungsfächern gleich hoch, gleich breit und/oder gleich tief ausgebildet, erleichtert dies das Einschieben und Durchschieben von Sendungen in ein Sendungsfach oder durch ein Sendungsfach. Vereinfacht gesprochen, können die Sendungsfächer eine wenigstens im Wesentlichen gleiche Größe aufweisen. In diesem Fall kann eine Sendung, die in ein Sendungsfach hinein passt ohne Probleme in ein angrenzendes Sendungsfach verschoben werden oder durch vorhergehende Sendungsfächer hindurch geschoben werden. Um Sendungsfächer unterschiedlicher Größe bereitstellen zu können, so dass auch Sendungen unterschiedlicher Größe platzsparend in dafür geeigneten Sendungsfächern aufgenommen werden können, können bevorzugt die Sendungsfächer unterschiedlicher Reihen von nebeneinander angeordneten Sendungsfächern unterschiedlich hoch, unterschiedlich breit und/oder unterschiedlich tief ausgebildet sein. Mit anderen Worten können übereinander Reihen von Sendungsfächern unterschiedlicher Größe vorgesehen sein, wobei die Sendungsfächer einer Reihe bevorzugt jeweils gleich groß ausgebildet sind.

Ein Sendungskasten weist vorzugsweise eine Steuerungseinrichtung zum Verstellen der seitlichen Verschlussmittel von der Verschlussstellung in die Verschiebestellung und zurück auf. So kann der Sendungskasten stets die Stellung der seitlichen Verschlussmittel so einstellen, dass der jeweils als nächstes gewünschte Beladeschritt, insbesondere durch ein Lieferfahrzeug, zuverlässig erfolgen kann. Der Sendungskasten kann eine Steuerungseinrichtung zum Erfassen und/oder Speichern einer Beladesituation aufweisen, so dass stets feststeht, welche Sendungsfächer noch für eine weitergehende Beladung zu Verfügung stehen. Wenn die Steuereinrichtung diese Informationen nicht speichert, können sie vorzugsweise immer wieder neu erfasst werden oder an eine externe Speichereinrichtung zur Speicherung weitergeleitet werden. Ebenso kann der Sendungskasten eine Sendeeinrichtung zum Senden einer Information betreffend eine Beladesituation des Sendungskastens und/oder betreffend der Stellung wenigstens bestimmter seitlicher Verschlussmittel aufweisen. Die Informationen können zur weiteren Verwendung an eine externe Steuereinrichtung und/oder an das Lieferfahrzeug gesendet werden, je nachdem was mit den Informationen geschehen werden soll. Auch kann eine Empfangseinrichtung zum Empfangen von Steuerbefehlen und/oder Informationen betreffend das Abliefern wenigstens einer Sendung durch ein Lieferfahrzeug in dem Sendungskasten vorgesehen sein. Dies dient dann einer wenigstens teilweisen Steuerung des Sendungskastens von außen und/oder der Abstimmung von Sendungskasten und Lieferfahrzeug.

Unter einer externen Steuereinrichtung wird eine Steuereinrichtung verstanden, die weder Teil des Sendungskastens noch des Lieferfahrzeugs ist. Es kann sich der Einfachheit halber um eine zentrale Rechnereinheit einen Server oder dergleichen handeln. Die externe Steuereinrichtung kann dann zweckmäßig sehr viele verschiedene Sendungskästen und/oder Lieferfahrzeuge steuern.

Besonders bevorzugt ist darüber hinaus die gemeinsame Verwendung des Lieferwagens und des Sendungskastens jeweils der eingangs genannten und zuvor näher beschriebenen Art als System aus einem Lieferfahrzeug nach einem der Ansprüche 1 bis 5 und einem Sendungskasten nach einem der Ansprüche 6 bis 9, wobei wenigstens ein seitliches Verschlussmittel wenigstens eines Sendungsfachs in einer eine seitliche Öffnung freigebende Verschiebestellung angeordnet ist und wobei die wenigstens eine Verschiebeeinrichtung, insbesondere die wenigstens eine Stempeleinheit, wenigstens abschnittsweise durch die wenigstens eine freigegebene seitliche Öffnung in wenigstens ein der Öffnung zugeordnetes Sendungsfach eingreifend angeordnet ist.

Dies trägt dem Umstand Rechnung, dass das beschriebene Lieferfahrzeug besonders geeignet für die Beladung eines ebenfalls beschriebenen Sendungskastens ist und gleichzeitig der beschriebene Sendungskasten seinerseits besonders geeignet für die Beladung durch das beschriebene Lieferfahrzeug ist. Das bevorzugte Zusammenwirken von dem Lieferfahrzeug und dem Sendungskasten ergibt sich dabei, indem die Verschiebeeinrichtung des Lieferwagens seitlich in den Sendungskasten eingreift und dabei wenigstens durch eine seitliche Öffnung eines Sendungsfachs hindurchgreift, um eine Sendung in dieses oder ein benachbartes Sendungsfach einzuschieben. Durch die Anordnung der Sendungsfächer in wenigstens einer Reihe nebeneinander und die den Sendungsfächern zugeordneten seitlichen Verschlussmittel wird das seitliche Einschieben oder Durchschieben von Sendungen in oder durch ein Sendungsfach mittels einer einfachen und zuverlässigen Verschiebeeinrichtung ermöglicht. Gleichzeitig wird aber bedarfsweise eine zuverlässige Trennung der Sendungskästen erreicht, um den Zugriff von unberechtigten Personen auf Sendungen zu verhindern.

Bei einer ersten besonders bevorzugten Ausgestaltung des Verfahrens hält das Lieferfahrzeug in Abhängigkeit der Verteilung der mit Sendungen belegten Sendungsfächer seitlich neben einer bestimmten von wenigstens zwei gegenüberliegenden Seiten des Sendungskastens. Die Vorgabe, auf welcher der gegenüberliegenden Seiten des Sendungskastens und insbesondere auch in welcher Ausrichtung das Lieferfahrzeug hält, kann durch die wenigstens eine Steuereinrichtung vorgegeben werden, und zwar anhand der Verteilung der mit Sendungen belegten Sendungsfächer. Es wird dann die Seite des Sendungskastens zum Anfahren gewählt, von der aufgrund der tatsächlichen Belegung des Sendungskastens mit Sendungen mehr Sendungen an den Sendungskasten übergeben werden können, ohne dass mehrere Sendungen ungewünscht in ein und dasselbe Sendungsfach gelangen. So können bedarfsweise mehr Sendungen vom Lieferfahrzeug an den Sendungskasten übergeben werden, als von der anderen Seite des Sendungskastens.

Alternativ oder zusätzlich kann die Anzahl der an den Sendungskasten zu übergebenden Sendungen dadurch gesteigert werden, dass das Lieferfahrzeug nach der Abgabe wenigstens einer Sendung an den Sendungskasten von der einen Seite des Sendungskastens zur gegenüberliegenden Seite des Sendungskastens fährt und dort seitlich neben dem Sendungskasten hält, und zwar vorzugweise in umgekehrter Richtung, so dass jeweils dieselbe Seite des Lieferfahrzeugs zum Sendungskasten weist. Anschließend erfolgt auch von dieser Seite des Sendungskastens eine Übergabe von wenigstens einer Sendung in den Sendungskasten. Dabei steuert die Steuereinrichtung wenigstens ein seitliches wenigstens einem Sendungsfach zugeordnetes Verschlussmittel an, und zwar wenn sich das Lieferfahrzeug an der gegenüberliegenden Seite des Sendungskastens befindet. Die Ansteuerung des Verschlussmittels erfolgt dann wiederum in Abhängigkeit der Verteilung der mit Sendungen belegten Sendungsfächer und zum Verstellen des Verschlussmittels von einer eine seitliche Öffnung des wenigstens einen Sendungsfachs verschließenden Verschlussstellung in eine die seitliche Öffnung freigebende Verschiebestellung. Zudem steuert die Steuereinrichtung des Lieferfahrzeugs die wenigstens eine Verschiebeeinrichtung zum Verschieben einer Sendung in ein Sendungsfach mit geöffneter seitlicher Öffnung an. Durch das Abliefern von Sendungen an den Sendungskasten von gegenüberliegenden Seiten, kann das Fassungsvermögen des Sendungskastens besser ausgenutzt werden. Zudem kann der zunehmenden Fragmentierung der mit Sendungen belegten Sendungsfächer innerhalb des Sendungskastens entgegengewirkt werden.

Alternativ oder zusätzlich kann durch wenigstens eine Erfassungseinrichtung zum Erfassen des erfolgten Einschiebens einer Sendung in ein Sendungsfach eine mit dem erfolgten Einschieben der Sendung in das Sendungsfach verbundene Information an eine Steuereinrichtung, insbesondere des Lieferfahrzeugs und/oder des Sendungskastens, weitergeleitet werden. Auf diese Weise wird erreicht, dass die Beladungssituation dokumentiert ist. Insbesondere kann so nachgehalten werden, welche Sendung in welchem Sendungsfach abgelegt ist. Es kann so auch erfasst werden, wann das Einschieben einer Sendung in ein Sendungsfach abgeschlossen ist, so dass beispielsweise die Verschiebeeinrichtung wieder in die eingezogene Stellung zurückverstellt werden kann, um eine weitere Sendung abzuliefern. Es kann so aber auch das Verstellen wenigstens eines seitlichen Verschlussmittels in die Verschlussstellung bewirkt werden, um das Beladen des Sendungsfachs abzuschließen oder eine weitere Sendung in ein angrenzendes Sendungsfach einschieben zu können. Bevorzugt wird es sein, wenn die Steuereinrichtung zur Aufnahme der Informationen betreffend die erfolgte Beladung eines Sendungsfachs im Sendungskasten angeordnet ist. So können die entsprechenden Informationen und Rückschlüsse vor Ort gespeichert sein und gezogen werden. Denkbar ist es aber auch, wenn alternativ oder zusätzlich die Steuereinrichtung im Lieferwagen vorgesehen ist, um das Abliefern der Sendungen in den Sendungskasten steuern zu können. Die Steuerbefehle können aber auch von dem Sendungskasten oder auch von einer externen Steuereinrichtung erzeugt werden, die bedarfsweise das Lieferfahrzeug und den Sendungskasten mit Steuerinformationen versorgen kann. Die Steuerinformationen können beispielweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), übertragen werden.

Eine Steuereinrichtung des Sendungskastens kann alternativ oder zusätzlich erfassen, welche Sendungsfächer mit Sendungen belegt sind und/oder welche Sendungsfächer keine Sendungen aufweisen. So ist die aktuelle Beladungssituation stets bekannt und kann die Beladungssituation zu einer Steuerung des Beladens des Sendungskastens mit Sendungen und/oder zum Abgeben von Sendungen an einen Abholer genutzt werden.

Dabei ist es weiter bevorzugt, wenn die Steuereinrichtung des Sendungskastens eine Information betreffend wenigstens ein Sendungsfach mit geöffneter seitlicher Öffnung zum Übernehmen einer Sendung aus dem Lieferfahrzeug und/oder eine Information betreffend die Belegung von Sendungsfächern mit Sendungen weitergibt. Entsprechende Informationen können vom Lieferfahrzeug genutzt werden, um die nächste Sendung zielgerichtet und in der jeweils gewünschten Weise an den Sendungskasten zu übergeben. Auch hier ist die Weitergabe der Information vom Sendungskasten an das Lieferfahrzeug besonders einfach und vorteilhaft. Um jedoch von außen in die Beladung eingreifen bzw. diese von außen steuern zu können, kann es ebenfalls zweckmäßig sein, wenn die entsprechende Information an eine externe Steuereinheit weitergegeben wird, die dann wiederum mit dem Sendungskasten und/oder dem Lieferfahrzeug zu Steuerungszwecken in Verbindung stehen kann.

Zum Übergeben einer Sendung an einen Sendungskasten kann zunächst eine Rampe des Lieferfahrzeugs von einer Nichtgebrauchsstellung in eine Gebrauchsstellung verstellt werden. Sodann kann die wenigstens eine zu übergebende Sendung von einem Sendungsspeicher über eine Übergabeeinrichtung an die sich in der Gebrauchsstellung befindliche Rampe angegeben werden. Dies erlaubt es, die zu übergebende Sendung über die Verschiebeeinrichtung und die Rampe in ein Sendungsfach des Sendungskastens zu verschieben. Die Rampe stellt dabei sicher, dass die zu übergebende Sendung zuverlässig von dem Lieferfahrzeug in den Sendungskasten gelangt, bedarfsweise wenigstens die Distanz zwischen dem Lieferfahrzeug und dem Sendungskasten überbrückt.

Wenn die Verschiebeeinrichtung, die Stempeleinheit und/oder die Rampe höhenverstellt wird, kann die Verschiebeeinrichtung, die Stempeleinheit und/oder die Rampe an das jeweilige Höhenniveau eines Sendungsfachs oder einer Reihe von nebeneinander angeordneten Sendungsfächern eines Sendungskastens angepasst werden, so dass das entsprechende Sendungsfach zuverlässig eine Sendung von dem Lieferfahrzeug übergeben bekommen kann. Die Höhenverstellung wird dabei vorzugsweise von einer Steuereinrichtung gesteuert, die sich im Lieferfahrzeug befinden kann aber nicht muss. Die Steuereinheit kann auch im Sendungskasten oder extern vorgesehen sein und, etwa per Funk, die Höhenverstellung steuern. Die Steuerinformationen können beispielweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), übertragen werden.

Wenn eine Steuereinrichtung, insbesondere des Sendungskastens, das Entnehmen einer Sendung aus wenigstens einem Sendungsfach erfasst, kann nachgehalten werden, welche Sendungsfächer geleert sind, um diese wieder mit Sendungen zu bestücken, etwa über das Lieferfahrzeug. So muss nicht der Sendungskasten komplett entleert sein, um neue Sendungen in den Sendungskasten einzubringen. Um festzustellen, dass ein Sendungsfach geleert wird bzw. ist, kann beispielsweise eine Information betreffend die Anweisung zum Öffnen und/oder betreffend das Verstellen eines dem Sendungsfach zugeordneten vorderen Verschlussmittels in die Entnahmestellung erfasst werden. Dann muss davon ausgegangen werden, dass die Sendung aus einem geöffneten Sendungsfach auch entnommen wird. Um dies sicherzustellen, kann alternativ oder zusätzlich wenigstens eine Sensoreinrichtung im Sendungskasten vorgesehen werden, welche eine Sendung in einem Sendungsfach oder im umgekehrten Falle die Leere eines Sendungsfachs direkt erfassen kann. In beiden Fällen kann sicher entschieden werden, ob ein bestimmtes Sendungsfach tatsächlich leer oder mit einer Sendung belegt ist.

Die Steuereinrichtung, insbesondere des Sendungskastens, kann alternativ oder zusätzlich wenigstens zwei seitliche Verschlussmittel zu beiden Seiten eines eine Sendung aufweisenden Sendungsfachs zum Verstellen von der Verschlussstellung in die Verschiebestellung ansteuern. Diese Ansteuerung bewirkt letztlich die Öffnung wenigstens eines Sendungsfachs zu beiden Seiten. Es werden nämlich gegenüberliegende seitliche Verschlussmittel eines Sendungsfachs in die Verschiebestellung verstellt, in der die zugehörige Öffnung freigegeben ist. Ein an beiden Seiten geöffnetes Sendungsfach kann nun vorteilhaft dazu genutzt werden, eine Sendung durch das Sendungsfach hindurchzuschieben. Dabei gelangt die Sendung dann durch eine seitliche Öffnung dieses Sendungsfachs in ein seitlich angrenzendes weiteres Sendungsfach. In diesem weiteren Sendungsfach kann die Sendung dann bis zur Abholung verbleiben. Die Sendung kann aber auch durch dieses Sendungsfach hindurchgeschoben werden. Das Verschieben der Sendung erfolgt dabei zudem bevorzugt durch die Verschiebeeinrichtung, insbesondere die Stempeleinheit, des Lieferfahrzeugs.

Besonders effektiv lässt sich der Sendungskasten mit neuen Sendungen beladen, wenn nacheinander eine Mehrzahl von Sendungen über die Verschiebeeinrichtung des Lieferfahrzeugs an eine entsprechende Mehrzahl von in einer Reihe nebeneinander angeordneten Sendungsfächern übergeben wird. Dies erfordert es lediglich, dass die nebeneinander angeordneten Sendungsfächer leer sind. Ist dies nicht der Fall, kann eine Sendung aus einem Sendungsfach durch eine seitliche Öffnung in ein angrenzendes Sendungsfach verschoben werden, um Platz für neue Sendungen zu machen. Dabei ist das Verschieben einer bereits vorhandenen Sendung nicht auf das Verschieben von einem Sendungsfach in das nächste Sendungsfach beschränkt. Durch das Verstellen mehrerer nacheinander angeordneter, seitlicher Verschlussmittel in die Verschiebestellung, kann die bereits im Sendungskasten hinterlegte Sendung auch durch weitere Sendungsfächer hindurchgeschoben werden, spätestens bis die Sendung das letzte Sendungsfach der entsprechenden Reihe von Sendungsfächern erreicht hat oder das letzte freie Sendungsfach erreicht hat. In der zuletzt genannten Alternative ist von einem weiteren Verschieben der Sendung Abstand zu nehmen, wenn verhindert werden soll, dass nach dem Verschieben zwei Sendungen in ein und demselben Sendungsfach angeordnet sind, jedoch nicht für die Abholung durch ein und denselben Abholer bestimmt sind. Dieses Prinzip gilt entsprechend auch für neu in den Sendungskasten einzuschiebende Sendungen. Auch diese können normalerweise nur soweit in den Sendungskasten eingeschoben werden, bis das letzte Sendungsfach einer Reihe von Sendungsfächern erreicht ist. Zudem soll auch bei diesen Sendungen verhindert werden, dass die Sendungen mit anderen Sendungen in ein und demselben Sendungsfach aufgenommen sind, wobei die Sendungen nicht zur Abholung durch dieselbe Person vorgesehen sind.

Zur Steuerung des Beladens eines Sendungskastens durch ein Lieferfahrzeug kann die Steuereinrichtung des Lieferfahrzeugs eine Information betreffend die Zuordnung der übergebenen Sendungen zu den die übergebenden Sendungen aufnehmenden Sendungsfächern weitergeben. So wird nachgehalten, welche Sendung in welchem Sendungskasten zur Abholung bereitliegt, so dass ein Abholer zuverlässig die für ihn zur Abholung bereitgehaltene Sendung in Empfang nehmen kann. Dabei ist es der Einfachheit halber bevorzugt, wenn diese Information an eine Steuereinrichtung des Sendungskastens übergeben wird. Grundsätzlich kann die Information aber auch an eine weder im Lieferwagen noch im Sendungskasten vorgesehene Steuereinrichtung weitergegeben werden. Diese Steuereinrichtung kann dann mit einer Steuereinrichtung des Lieferfahrzeugs oder des Sendungskastens, etwa über Funk, in Verbindung stehen. Die Steuerinformationen können beispielweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), übertragen werden.

Nachfolgend wird die Erfindung anhand einer lediglich Ausführungsbeispiele darstellenden Zeichnung näher erläutert. In der Zeichnung zeigt
- Fig. 1A-B: ein erfindungsgemäßes Lieferfahrzeug in einer Stellung zum Verfahren in schematischer Darstellung in einer Ansicht von der Seite und einer Ansicht von vorne,
- Fig. 2A-B: das Lieferfahrzeug aus Fig. 1 in einer Stellung zum Abliefern von Sendungen in schematischer Darstellung in einer Ansicht von der Seite und einer Ansicht von vorne,
- Fig. 3A-B: einen erfindungsgemäßen Sendungskasten in einer Stellung zum Abholen von Sendungen in schematischer Darstellung in einer Ansicht von der Seite und einer Ansicht von vorne,
- Fig. 4A-B: den Sendungskasten in einer Stellung zum Aufnehmen von Sendungen in schematischer Darstellung in einer Ansicht von der Seite und einer Ansicht von vorne,
- Fig. 5: ein System aus Lieferfahrzeug und Sendungskasten zum Abliefern von Sendungen
- Fig. 6A-E: Verfahrensschritte eines erfindungsgemäßen Verfahrens in schematischer Darstellung
- Fig. 7: das Zusammenwirken von unterschiedlichen Steuerungseinrichtungen bei der Durchführung eines erfindungsgemäßen Verfahrens.

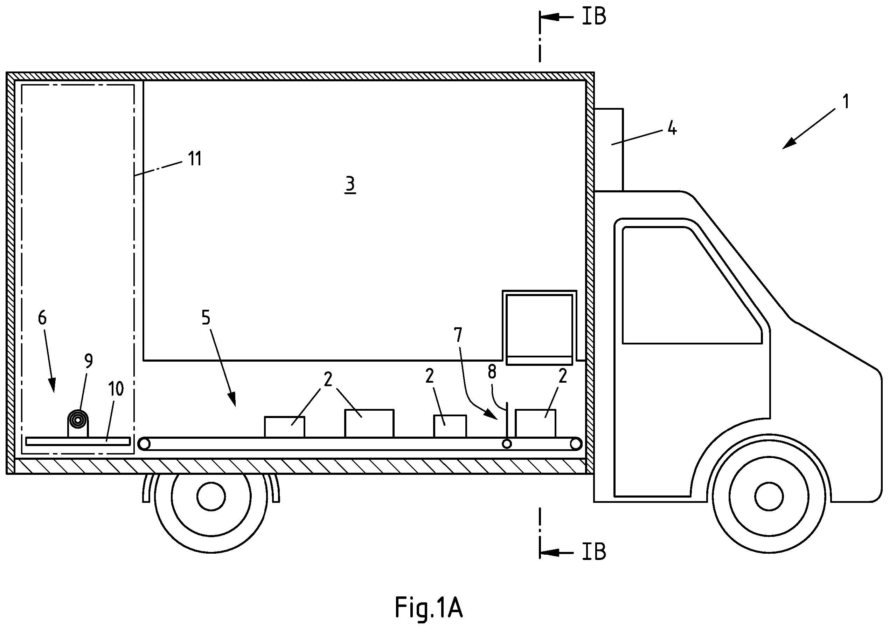

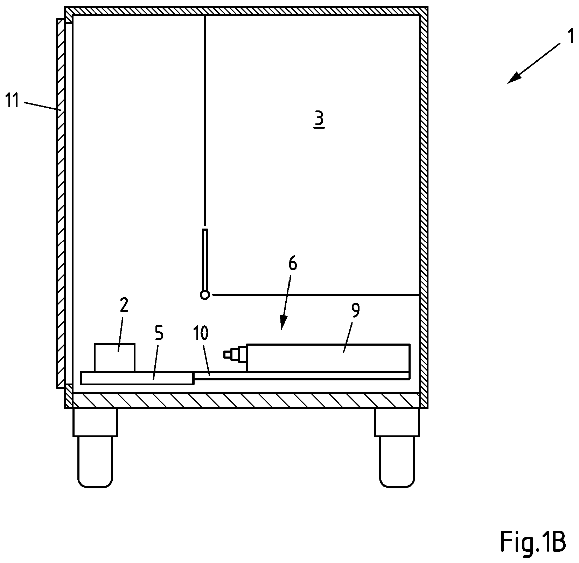

In den Fig. 1A-B ist ein Lieferfahrzeug 1 in einer Seitenansicht und einer Frontalansicht dargestellt, wobei die Wände des Lieferfahrzeugs 1 in schematischer Weise transparent gestaltet sind. Das dargestellte und insoweit bevorzugte Lieferfahrzeug 1 weist eine Fahrerkabine auf, obwohl es sich bei dem Lieferfahrzeug 1 um ein autonomes Lieferfahrzeug 1 handelt. Autonom bedeutet in diesem Zusammenhang, dass das Lieferfahrzeug 1 autonom von einem Beladeort, etwa einer Verteilstation für Sendungen 2, an dem das Lieferfahrzeug 1 mit abzuliefernden Sendungen 2 beladen wird, selbstständig zu wenigstens einem Lieferort fahren kann, ohne dass es dabei des Eingreifens eines Fahrers bedarf. Der Fahrer kann in bestimmten Situationen eingreifen und das Lieferfahrzeug 1 führen bzw. lenken. Er kann das Lieferfahrzeug 1 aber auch vollständig eigenständig fahren. Grundsätzlich kann das Lieferfahrzeug 1 auch ohne Fahrerkabine ausgeführt sein, wenn kein Fahrer benötigt wird.

Des Weiteren ist das dargestellte und insoweit bevorzugte Lieferfahrzeug 1 aber auch insoweit autonom, als dass das Abliefern von Sendungen 2 durch das Lieferfahrzeug 1 selbst bewirkt werden kann. Das Lieferfahrzeug 1 agiert insoweit ebenfalls selbstständig, ohne dass es des Eingriffs eines Bedieners, etwa des Fahrers, benötigen würde. Auch hier kann aber grundsätzlich vorgesehen sein, dass eine Person in das Abliefern eingreift oder dieses steuert, wobei die Steuerung dann vor Ort oder aus der Entfernung im Sinne einer Fernsteuerung erfolgen kann. Zu diesem Zwecke können beispielsweise Steuersignale von einer externen Steuereinrichtung über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an das Lieferfahrzeug gesendet werden. Für das autonome Fahren kann sich das Lieferfahrzeug 1 wenigstens eines Satellitennavigationssystems bedienen, etwa dem Global Positioning System (GPS), dem System GLONASS, dem System Galileo, dem System Beidou, dem Indian Regional Navigation Satellite System oder dem Quasi-Zenit-Satelliten-System.

Ein Großteil des Lieferfahrzeugs 1 wird durch einen Sendungsspeicher 3 gebildet, um möglichst viele Sendungen 2 mitführen und am entsprechenden Lieferort abliefern zu können. Dabei kommen grundsätzlich unterschiedliche Arten von Sendungsspeichern 3 in Frage, weshalb die Art des vorliegenden Sendungsspeichers 3 nicht näher spezifiziert ist. In einem besonders einfachen Fall wird der Sendungsspeicher 3 mit Sendungen 2 in der Reihenfolge beladen, die der Reihenfolge oder der umgekehrten Reihenfolge des Ablieferns der Sendungen 2 entspricht. Es bedarf dann keiner weiteren Sortierung im Sendungsspeicher 3 und es wird das Entladen vereinfacht. Die Sendungen 2 können einfach über eine Fördereinrichtung stückweise der Reihe nach ausgegeben werden. Die Fördereinrichtung ist dabei vorzugsweise elektrisch und durch eine Steuereinrichtung 4 des Lieferfahrzeugs 1 angetrieben. Es kann aber auch vorgesehen sein, dass die Sendungen 2 in der gewünschten Reihenfolge, die beim Beladen des Lieferfahrzeugs 1 noch nicht feststehen muss, von einem Roboterarm oder einem Portalroboter abgegeben werden, der sich wenigstens in zwei senkrecht zueinander stehenden Raumrichtungen bewegen kann. Der Roboterarm oder der Portalroboter kann dann jeweils die gewünschte Sendung 2 ergreifen und aus dem Sendungsspeicher 3 bewegen. Andere Mittel sind aber denkbar. Wie genau der Sendungsspeicher 3 ausgebildet ist, ist vorliegend grundsätzlich von geringerer Bedeutung.

Die aus dem Sendungsspeicher 3 kommenden Sendungen 2 werden von einer Übergabeeinrichtung 5 an eine Verschiebeeinrichtung 6 weitergeleitet. Grundsätzlich wäre es aber auch denkbar, dass die von dem Sendungsspeicher 3 ausgegebenen Sendungen 2 direkt und ohne Umweg über eine separate Übergabeeinrichtung 5 der Verschiebeeinrichtung 6 zugeführt werden. Die dargestellte Übergabeeinrichtung 5 ist als Förderband ausgebildet, ohne dass dies zwingend wäre. Es kämen grundsätzlich auch passive Übergabeeinrichtungen wie Rutschen oder dergleichen oder aber andere aus dem Stand der Technik bekannte aktive, also angetriebene Übergabeeinrichtungen in Frage, die geeignet sind, die Sendungen 2 von dem Sendungsspeicher 3 der Verschiebeeinrichtung 6 zuzuführen. Die dargestellte und insoweit bevorzugte Übergabeeinrichtung 5 in Form eines Förderbands umfasst zudem noch eine Vereinzelungseinrichtung 7, um die Sendungen 2 zuverlässig getrennt voneinander abliefern bzw. der Vereinzelungseinrichtung 7 zuführen zu können. Bedarfsweise könnte diese Vereinzelungseinrichtung 7 als ein zusätzliches Förderband ausgebildet werden, das die Sendungen 2 einzeln nacheinander übergeben und/oder beschleunigen kann, um so eine räumliche Trennung aufeinanderfolgender Sendungen 2 zu erreichen. Aber auch andere Vereinzelungseinrichtungen sind möglich. Vorliegend ist ein von einer Nichtgebrauchsstellung in eine Gebrauchsstellung in Anlage an wenigstens einer Sendung 2 und zurück verstellbares Separierungsschwert 8 vorgesehen. Wird es in die Gebrauchsstellung verstellt, gelangt es in Anlage an die davor befindliche Sendung 2 und hält diese durch einen Formschluss auf. Wird das Separierungsschwert 8 in die Nichtgebrauchsstellung verstellt, etwa nach oben geschwenkt, ist der Weg frei für die zuvor von dem Separierungsschwert 8 aufgehaltene Sendung 2.

Die Verschiebeeinrichtung 6 weist bei dem dargestellten und insoweit bevorzugten Lieferfahrzeug 1 eine Stempeleinheit 9 und eine Rampe 10 auf. Die Stempeleinheit 9 ist dabei so ausgebildet, dass sie eine vor der Stempeleinheit 9 befindliche und auf der sich in der Gebrauchsstellung befindliche Rampe 10 ruhende Sendung 2 entlang der Rampe 10 wegdrücken und damit verschieben kann. Währenddessen wird die Sendung 2 wenigstens abschnittsweise von der Rampe 10 gestützt bzw. geführt. In der dargestellten Nichtgebrauchsstellung der Rampe 10 ist diese so angeordnet, dass die Rampe 10 das Verfahren des Lieferfahrzeugs 1 nicht beeinträchtigt. Vorliegend ist die Rampe 10 eingezogen, was jedoch nicht zwingend ist. In der Gebrauchsstellung ist die Rampe 10 vorzugsweise beim Stillstand des Lieferfahrzeugs 1 zum Abliefern von Sendungen 2 angeordnet. Um die Sendungen 2 jeweils auf der gewünschten Höhe abliefern zu können, sind bei dem dargestellten und insoweit bevorzugten Lieferfahrzeug 1 die Verschiebeeinrichtung 6, respektive die Stempeleinheit 9 und die Rampe 10 höhenverstellbar ausgebildet. Zudem ist die Übergabeeinrichtung 5 höhenverstellbar ausgebildet, um der Verschiebeeinrichtung 6 die Sendungen 2 schon auf der richtigen Höhe zuführen zu können. Dies ist zwar nicht zwingend, macht aber ein vielfaches Verstellen der Verschiebeeinrichtung 6 entbehrlich und beschleunigt das Abliefern der Sendungen 2. Zum Verschieben der Sendungen 2 nach außen ist eine Schiebetür 11 vorgesehen.

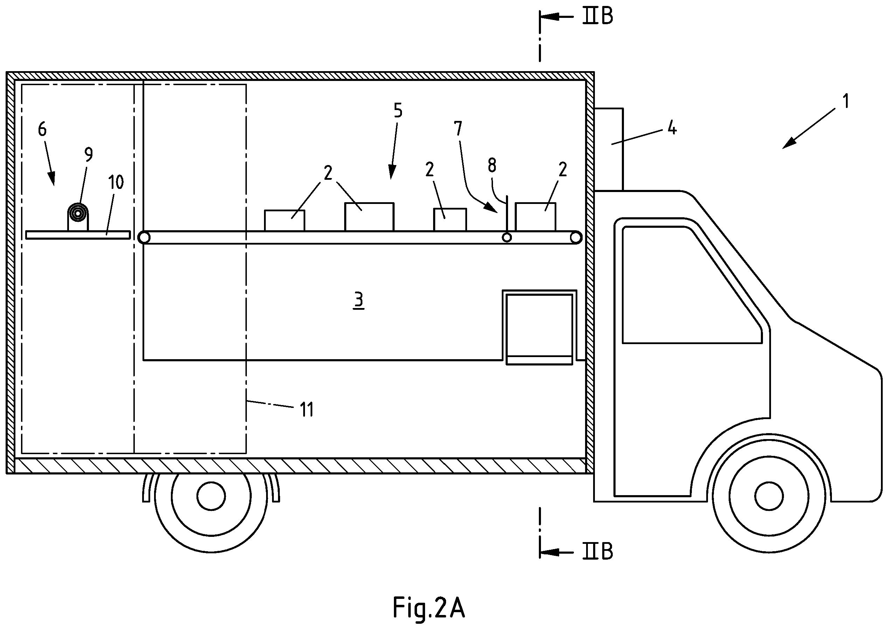

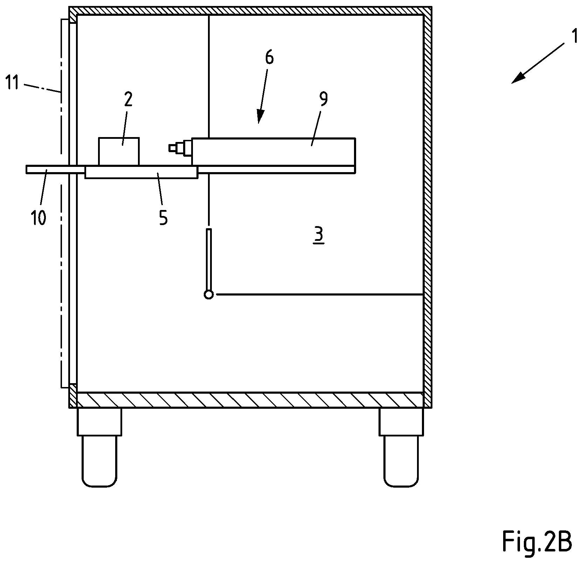

In den Fig. 2A-B ist dasselbe Lieferfahrzeug 1 wie in den Fig. 1A-B dargestellt, allerdings nicht in einer Stellung, die dem Verfahren des Lieferfahrzeugs 1 dient, sondern die dem Abliefern von Sendungen 2 dient, während das Lieferfahrzeug 1 steht. Daher befindet sich die Rampe 10 in einer Gebrauchsstellung, in der die Rampe 10 aus der Schiebetür 11 aus dem Lieferfahrzeug 1 nach draußen ragt, um eine Sendung 2 außerhalb des Lieferfahrzeugs 1 abliefern zu können. Die Rampe 10 ist dabei in einer wenigstens im Wesentlichen horizontalen Ausrichtung ausgerichtet und in dieser Richtung auch aus dem Lieferfahrzeug 1 herausgeschoben. Die Rampe 10 ragt mit einem Ende noch in das Lieferfahrzeug 1 hinein und kann dort eine Sendung 2 von der Übergabeeinrichtung 5 empfangen. Mit dem anderen Ende ragt die Rampe 10 nach außen gegenüber dem Lieferfahrzeug 1 vor. Bedarfsweise könnte die Rampe 10 in der Gebrauchsstellung auch vollständig außerhalb des Lieferfahrzeugs 1 angeordnet und/oder zum Schwenken zwischen der Gebrauchsstellung und der Nichtgebrauchsstellung sein, was aber regelmäßig nicht bevorzugt sein wird. Wenn eine Sendung 2 auf der Rampe 10 liegt, kann der Stempel der Stempeleinheit 9 der Verschiebeeinheit 6 von einer eingezogenen Stellung der Stempeleinheit 9 in eine ausgeschobene Stellung der Stempeleinheit 9 ausgefahren werden und die Sendung 2 so entlang der Rampe 10 aus dem Lieferfahrzeug 1 geschoben werden. Bevor dies erfolgt, können die Verschiebeeinrichtung 6 und die Übergabeeinrichtung 5 zunächst in ihrer Höhe so verstellt werden, dass die Verschiebeeinrichtung 6 und die Übergabeeinrichtung 5 in der richtigen Höhe angeordnet sind, um die Sendung 2 in der richtigen bzw. gewünschten Höhe abzuliefern.

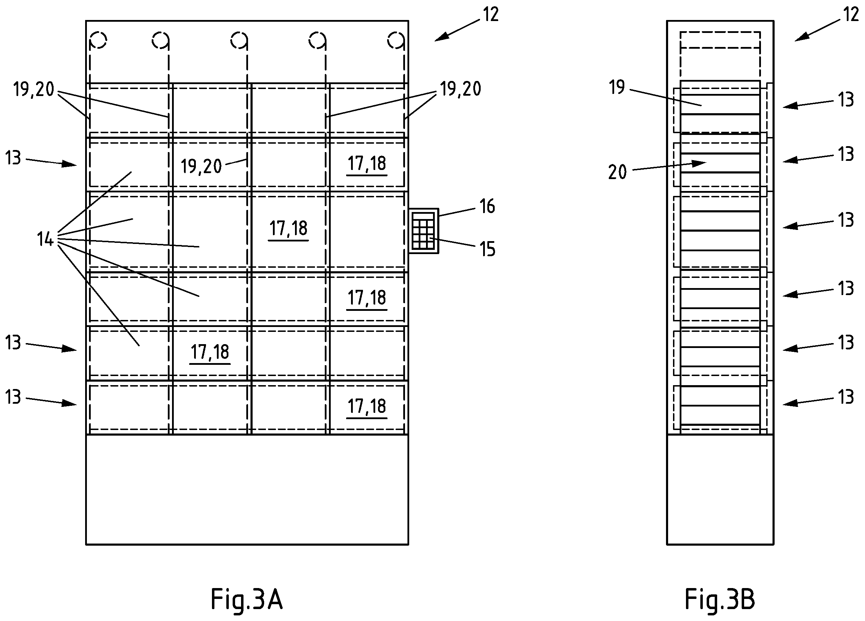

In den Fig. 3A-B ist ein Sendungskasten 12 zum Aufnehmen und Abgeben von Sendungen 2 dargestellt. Der Sendungskasten 12 weist mehrere Reihen 13 von nebeneinander angeordneten Sendungsfächern 14 auf, die voneinander getrennt werden können. Die Reihen 13 von Sendungsfächern 14 sind zudem übereinander, vorzugsweise fluchtend übereinander angeordnet. In den einzelnen Sendungsfächern 14 können jeweils eine Sendung 2 oder mehrere Sendungen 2 aufgenommen sein. Werden diese eingelegt, erhält vorzugsweise der Adressat oder ein Abholer eine Nachricht über das Einlegen der Sendung 2 und einen Code, mit dem sich der Adressat oder Abholer am Sendungskasten 12 authentisieren kann. Der Abholer gibt beispielsweise den Code über ein Bedienfeld 15 ein oder sendet den Code beispielsweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an eine Steuereinrichtung 16 im Sendungskasten 12 oder eine andere Steuereinrichtung.

Es wird nun ein Steuerbefehl erzeugt, um das zu dem Code zugehörige Sendungsfach 14 zu öffnen, so dass der Abholer die gewünschte Sendung 2 aus dem Sendungsfach 14 entnehmen kann. Zum Öffnen des Sendungsfachs 14 und zum Entnehmen der Sendungen 2 weist jedes Sendungsfach 14 eine vordere Öffnung 17 auf, der ein vorderes Verschlussmittel 18 zugeordnet ist. Das vordere Verschlussmittel 18 kann von einer die vordere Öffnung 17 verschließenden Schließstellung in eine die vordere Öffnung 17 zum Entnehmen der Sendung 2 freigebende Stellung verstellt werden. Dies kann durch einen elektrischen Antrieb oder händisch erfolgen. Besonders zweckmäßig ist es, insbesondere wenn kein elektrischer Antrieb vorgesehen ist, dass jedem vorderen Verschlussmittel 18 ein Verriegelungsmittel, insbesondere ein Schloss zum Verriegeln und Entriegeln des vorderen Verriegelungsmittels zugeordnet ist. Damit zur Abholung einer bestimmten Sendung 2 gezielt das das zugehörige Sendungsfach 14 verschließende vordere Verschlussmittel 18 und nur dieses geöffnet werden kann, bietet sich ein elektrisch betriebenes Verriegelungssystem besonders an.

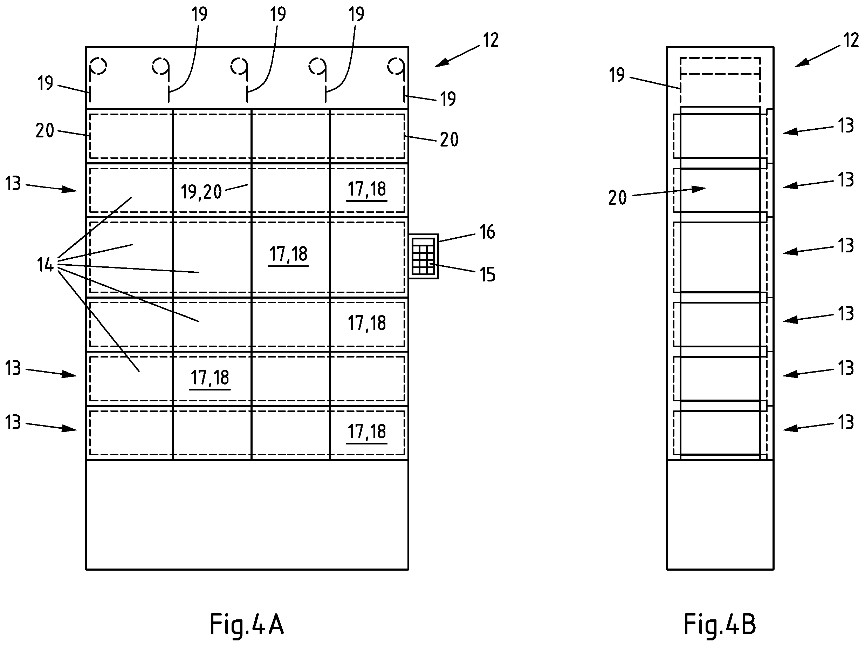

Die einzelnen Sendungsfächer 14 des Sendungskastens 12 sind über seitliche Verschlussmittel 19 voneinander getrennt. Die seitlichen Verschlussmittel 19 sind dabei von einer seitliche Öffnungen 20 der Sendungsfächer 14 verschließenden Verschlussstellung in eine seitliche Öffnung 20 der Sendungsfächer 14 freigebende Verschiebestellung verstellbar, die in den Fig. 4A-B dargestellt sind. In der Verschiebestellung besteht mithin eine direkte Verbindung zwischen wenigstens zwei Sendungsfächern 14, über die Sendungen 2 von einem Sendungsfach 14 in das angrenzende Sendungsfach 14 verschoben werden können. Der Einfachheit halber ist bei dem dargestellten und insoweit bevorzugten Sendungskasten 12 jeder Spalte von Sendungsfächern 14 jeweils ein gemeinsames seitliches Verschlussmittel 19 zugeordnet. Dies ist auch der Grund, weshalb bei dargestellten und insoweit bevorzugten Sendungskästen 12 die Sendungsfächer 14 dieselbe Breite und dieselbe Höhe, jedenfalls in einer gemeinsamen Spalte, aufweisen. Es ist aber auch bevorzugt, wenn die Sendungsfächer 14 jeweils einer gemeinsamen Reihe von Sendungsfächern 14 bzw. Zeile von Sendungsfächern 14 dieselbe Tiefe aufweisen. Dann können durch freigegebene seitliche Öffnungen Sendungen 2 von einem Sendungsfach 14 in ein angrenzendes Sendungsfach 14 verschoben werden, ohne dass es zu einem Blockieren der Sendung 2 in einem Sendungsfach 14 käme. Um den Platz auch bei unterschiedlich großen Sendungen 2 effektiv nutzen zu können, sind jedoch die Sendungsfächer 14 in unterschiedlichen Reihen von Sendungsfächern 14 vorzugsweise unterschiedlich hoch ausgebildet.

Das ganz links und das ganz recht dargestellte seitliche Verschlussmittel 19 öffnet jede Reihe von Sendungsfächern 14 nach außen, so dass neue Sendungen 2, ohne die vorderen Verschlussmittel 18 in die Entnahmestellung verstellen zu müssen, mit neuen Sendungen 2 beschickt bzw. bestückt werden können. Dazu müssen die Sendungen 2 lediglich von der Seite soweit in den Sendungskasten 12 eingeschoben werden, bis die Sendungen 2 das gewünschte Sendungsfach zur Aufnahme der Sendung 2 erreicht haben. Das Füllen des Sendungskastens 12 von der Seite kann bedarfsweise von einem Bediener, etwa einem Zusteller für die Sendungen 2, erfolgen. Es muss dabei nur festgehalten oder übermittelt werden, welche Sendungen 2 sich nach dem Beschicken des Sendungskastens 12 in welchem Sendungsfach 14 befinden, damit der Sendungskasten 12 auf eine spätere Anfrage eines Abholers stets das vordere Verschlussmittel 18 entriegelt und/oder in die Entnahmestellung verstellt, die dem Sendungsfach 14 zugeordnet ist, in welchem sich die jeweils abzuholende Sendung 2 befindet.

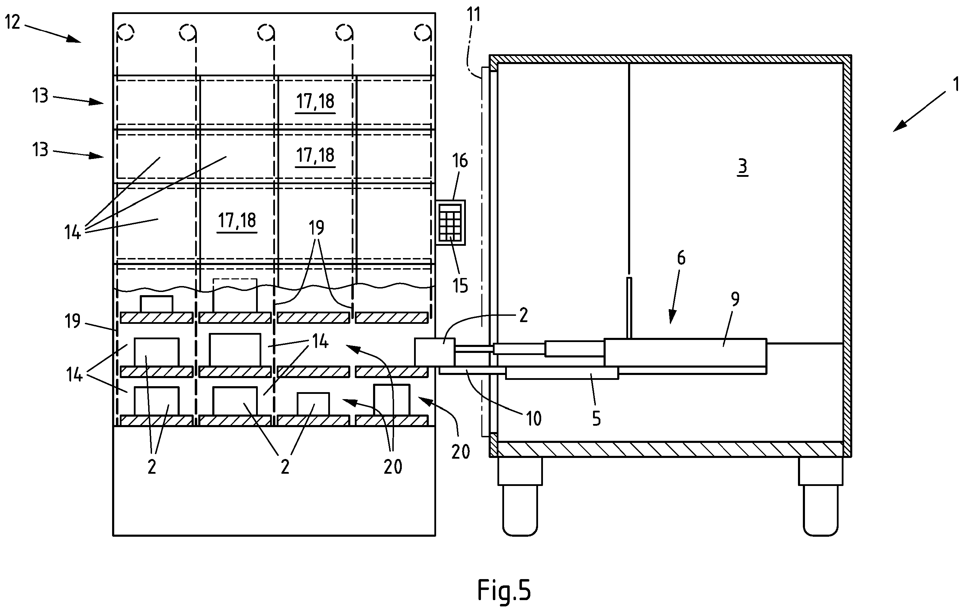

Wie in der Fig. 5 dargestellt ist, kann die Beschickung des Sendungskastens 12 aber auch einfach und zuverlässig von einem Lieferfahrzeug 1 der beschriebenen Art erfolgen. Der Sendungsspeicher 12 übergibt dabei eine oder mehrere Sendungen 2 an die Übergabeeinrichtung 5, die diese Sendungen 2 dann nach und nach, also vereinzelt und separat an die Rampe 10 übergibt, entlang derer die Stempeleinheit 9 der Verschiebeeinrichtung 6 die Sendung in den Sendungskasten 12 einschiebt. Zu diesem Zweck fährt die teleskopierbare Stempeleinheit 9 entsprechend aus und schiebt die Sendung 2 dabei entsprechend vor sich her. Die Stempeleinheit 9 kann die Sendung 2 durch ein entsprechendes Ausfahren aber nicht nur bis in den Sendungskasten 12 verschieben, sondern auch noch im Sendungskasten 12 verschoben werden. Zum letzteren benötigt es nicht zwingend der Rampe 10, die mithin nicht so weit ausfahrbar sein muss, wenn die Sendungen 2 beim entsprechenden Verschieben entlang der Böden der Sendungsfächer 14 abrutschen.

Dadurch, dass die Stempeleinheit 9 bei der Übergabe einer jeden Sendung 2 um eine bestimmte, vorgegebene Strecke ausgefahren wird, wird sichergestellt, dass die Sendung 2 jeweils in das gewünschte Sendungsfach 14 gelangt, bzw. kann erfasst werden, welche Sendung 2 in welches Sendungsfach 14 gelangt ist. Indem die Verschiebeeinrichtung 6, die Rampe 10 und die Stempeleinheit 9 höhenverstellbar im Lieferfahrzeug 1 angeordnet sind, wird sichergestellt, dass die Sendungen 2 auf einer geeigneten oder der gewünschten Höhe an den Sendungskasten 12 übergeben werden. Dabei wird die Höhe vorgegeben und/oder erfasst das Lieferfahrzeug 1 mit wenigstens einem Sensor den Sendungskasten 12, um die Höhe von der Rampe 10 und der Stempeleinheit 9 an die Höhe der von einem seitlichen Verschlussmittel 19 freigegebenen seitlichen Öffnung 20 eines Sendungsfachs 14, die von dem Sensor ermittelt werden kann, anzupassen.

Damit die Verschiebeeinrichtung 6, respektive die Rampe 10, und/oder die Übergabeeinrichtung 5 nicht zu oft in der Höhe verstellt werden muss, können zunächst die an eine Reihe 13 von Sendungsfächern 14 auf einer gemeinsamen Ebene zu übergebenden Sendungen 2 zunächst von dem Sendungsspeicher 12 an die Übergabeeinrichtung 5 übergeben werden. Dann kann die Übergabeeinrichtung 5 mit der Verschiebeeinrichtung 6 in der Höhe verstellt werden und die Verschiebeeinrichtung 6 auf dem entsprechenden Höhenniveau dann alle Sendungen 2 der Übergabeeinrichtung 5 nacheinander in den Sendungskasten 12 einschieben.

Wenn alle Sendungen 2 an den Sendungskasten 12 übergeben worden sind, entfernt sich das Lieferfahrzeug 1 und schließen sich die seitlichen Verschlussmittel 19, bis sie wieder die Verschlussstellung erreicht haben.

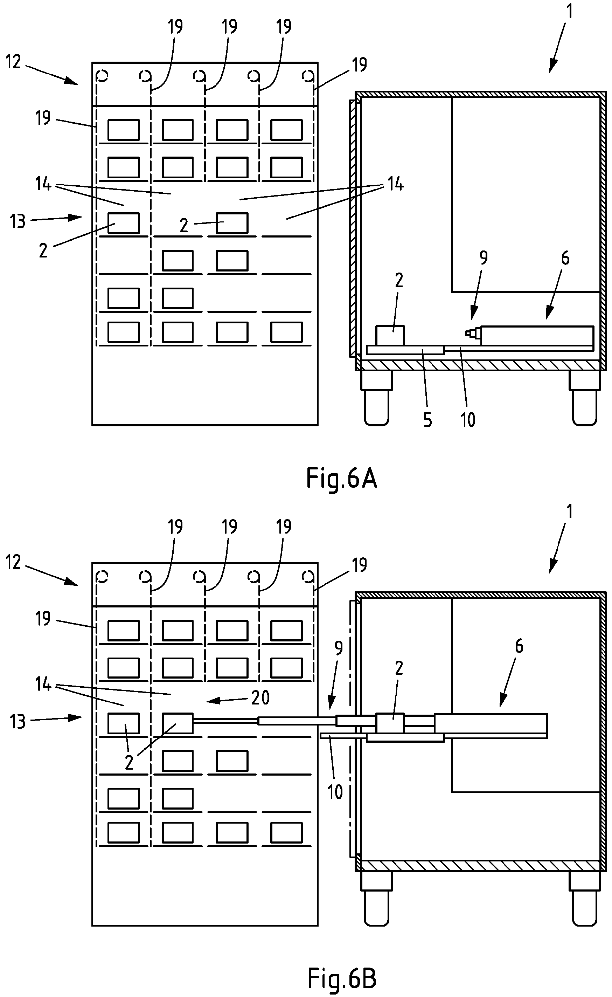

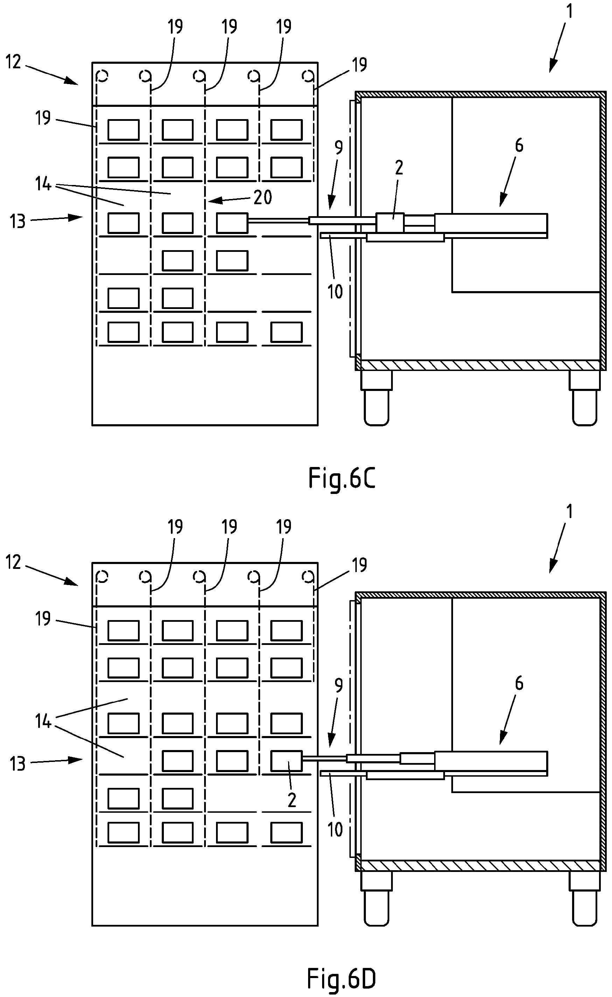

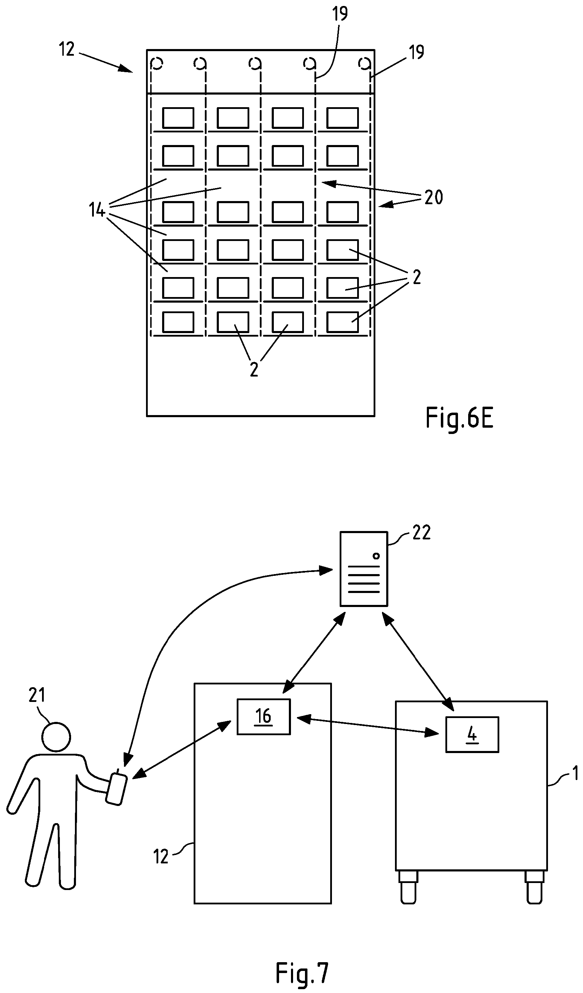

Beispielhafte Schritte beim Abliefern von Sendungen 2 durch ein Lieferfahrzeug 1 in einen Sendungskasten 12 sind in den Fig. 6 dargestellt. So können wie in der Fig. 6A dargestellt ist, zunächst bei einem teilweise leeren oder teilweise entleerten Sendungskasten 12 zunächst seitliche Verschlussmittel 19 wenigstens teilweise geöffnet werden. Danach wird die Verschiebeeinrichtung 6 auf ein Höhenniveau einer Reihe 13 von Sendungsfächern 14 angehoben, in der sich bereits eine Sendung 2 befindet, und zwar in einem Sendungsfach 14, dessen benachbartes Sendungsfach 14 auf der vom Lieferfahrzeug 1 abgewandten Seite keine Sendung 2 aufweist. Um möglichst viele Sendungen 2 aufnehmen zu können, wird die Verschiebeeinrichtung 6 nach dem Anpassen des Höhenniveaus soweit ausgefahren, dass die Verschiebeeinrichtung 6 die Sendung 2 in das benachbarte Sendungsfach 12 verschiebt. Die Sendung 2 kann dabei vorzugsweise bis in das letzte Sendungsfach 14 der entsprechenden Reihe 13 von Sendungsfächern 14 verschoben werden. Alternativ kann die Sendung 2 bis in das letzte leere Sendungsfach 14 in der Verschieberichtung 6 verschoben werden, und zwar ausgehend von dem Sendungsfach 14, in dem sich die Sendung 2 ursprünglich befunden hat, wie dies in der Fig. 6B dargestellt ist. Um wie viele Sendungsfächer 14 die Sendung 2 dabei verschoben wird, ist dabei weniger von Bedeutung. So wird verhindert, dass versehentlich zwei Sendungen 2 in ein Sendungsfach 14 gelangen bzw. zwei Sendungen 2 in ein Sendungsfach 14 gelangen, die zur Abholung durch unterschiedliche Personen vorgesehen sind. Zudem ist aus diesem Grunde auch die seitliche Öffnung 20 hin zu dem bereits belegten Sendungsfach 14 durch ein seitliches Verschlussmittel 19 verschlossen.

Sodann oder bereits zuvor können von dem Sendungsspeicher 12 so viele Sendungen 2 entnommen werden, wie auf diesem Höhenniveau in die Reihe 13 von Sendungsfächern 14 abgegeben werden sollen bzw. können. Eine andere Anzahl von Sendungen 2 kann aber ebenfalls entnommen werden, und zwar bedarfsweise auch zu einem anderen Zeitpunkt. Nun werden die Sendungen 2, die bedarfsweise bereits mittels der Vereinzelungseinrichtung 7 voneinander separiert worden sind, nacheinander an die Rampe 10 der Vereinzelungseinrichtung 7 übergeben und von der Stempeleinheit 9 durch Verstellen in eine ausgeschobene Stellung nebeneinander in die noch freien Sendungsfächer 14 der entsprechenden Reihe 13 von Sendungsfächern 14 übergeben. Nach der Übergabe jeder einzelnen Sendung 2 wird bedarfsweise das dem Lieferfahrzeug 1 zugewandte seitliche Verschlussmittel 19 des zuletzt mit einer Sendung 2 belegten Sendungsfachs 14 in eine die zugehörige seitliche Öffnung 20 schließende Verschlussstellung verstellt. So wird vermieden, dass eine Sendung 2 versehentlich zu weit in den Sendungskasten 12 eingeschoben wird. Dies ist in der Fig.6C dargestellt.

In einem nächsten Schritt kann die Verschiebeeinrichtung 6 zusammen mit der Übergabeeinrichtung 6 auf das Höhenniveau der darunterliegenden Reihe 13 von Sendungsfächern 14 abgesenkt werden. Dies erfolgt bedarfsweise zusammen mit der Übergabeeinrichtung 6, wenn diese noch Sendungen 2 aufweist oder es werden erst neue Sendungen 2 aus dem Sendungsspeicher 3 an die Übergabeeinrichtung 5 abgegeben, wozu die Übergabeeinrichtung 5 bedarfsweise erst weiter nach unten verstellt und anschließend wieder bis auf das neue Niveau der Verschiebeeinrichtung 6 angehoben werden muss. Dort scheidet ein Verschieben bereits vorhandener Sendungen 2 eher aus, sofern die beiden dort vorgesehenen Sendungen 2 weiter in getrennten Sendungsfächern 14 verbleiben sollen. Es wird also nur eine weitere Sendung 2 übergeben, wie dies in der Fig. 6D dargestellt ist. Um das dann noch leere Sendungsfach 14 füllen zu können, könnte das Lieferfahrzeug 1 an die andere Seite des Sendungskastens 12 fahren und das entsprechende Sendungsfach 14 von dort beladen. Ob dies wegen eines zu belegenden Sendungsfachs 14 jedoch zweckmäßig ist, kann bedarfsweise von einer Steuereinrichtung 4,16 bestimmt werden, etwa anhand des Verhältnisses von noch freien Sendungsfächern 14 zu noch abzuliefernden Sendungen.

Unabhängig davon können noch die beiden freien Sendungsfächer 14 durch das Lieferfahrzeug 1 wie bereits beschrieben mit Sendungen 2 gefüllt werden. Abschließend werden dann noch die seitlichen Verschlussmittel 19 so verstellt, dass sie alle seitlichen Öffnungen 20 der Sendungsfächer 14 sicher verschließen. Die entsprechenden Rolltore sind also vorliegend alle bis ganz nach unten gefahren. Anders ausgedrückt befinden sich dann alle seitlichen Verschlussmittel 19 in die seitlichen Öffnungen 20 verschließenden Verschlussstellungen. Es kann sich also nach dem Beladen des Sendungskastens 12 durch das Lieferfahrzeug 1 die in der Fig. 6E dargestellte Stellung ergeben.

In der Fig. 7 ist schematisch eine Kommunikation zwischen dem Sendungskasten 12 und einem Lieferfahrzeug 1 einerseits und mit einem Abholer 21 andererseits dargestellt. Dabei kann die jeweilige Kommunikation ausschließlich direkt zwischen dem Sendungskasten 12 einerseits und dem Lieferfahrzeug 1 oder dem Abholer 21 andererseits erfolgen. Es kann aber die Kommunikation wenigstens in Teilen auch über eine externe Steuereinrichtung 22, etwa über einen Server oder dergleichen erfolgen. Nachfolgend sollen nur einige der möglichen Ausgestaltungen beschrieben werden. Bei der Anlieferung neuer Sendungen 2 wird dem Lieferfahrzeug 1 beispielsweise mitgeteilt, welche Beladungssituation der Sendungsfächer 14, also die Verteilung der Sendungen 2 in den Sendungsfächern 14 vorliegt. Dann kann das Lieferfahrzeug 1 den Sendungskasten 12 anweisen, wie die seitlichen Verschlussmittel 19 zu verstellen sind, um die Beladung mit Sendungen 2 zu bewirken. Es kann aber auch die Beladungssituation einer externen Steuereinrichtung 22 mitgeteilt werden, die dann das Lieferfahrzeug 1 und den Sendungskasten 12 steuert. Wenn diese Information an eine externe Steuereinrichtung 22 übermittelt wird, hat das den Vorteil, dass dieser immer bekannt ist, wie viele Sendungen 2 noch an einen bestimmten Sendungskasten 12 geliefert werden können, bevor ein Lieferfahrzeug 1 zu dem Sendungskasten 12 fährt. Grundsätzlich kann der externen Steuereinrichtung 22 auch nur ein Status eines bestimmten Sendungsfachs 14 mitgeteilt werden, wenn dieses geleert oder gefüllt wird. Wie dann die aktuelle Beladungssituation ist, kann die externe Steuereinrichtung 22 anhand dieser Informationen selbst ermitteln.

Unabhängig davon kann der Sendungskasten 12 Sensoren zum Überwachen der Sendungsfächer 14 aufweisen. Diese erkennen dann bedarfsweise, ob ein Sendungsfach 14 belegt ist oder leer. Es kann aber auch darauf geschlossen werden, dass ein Sendungsfach 14 leer ist, wenn dessen vorderes Verschlussmittel 18 geöffnet worden ist. Dann ist nämlich davon auszugehen, dass eine Sendung 2 aus dem Sendungsfach 14 entnommen worden ist, jedenfalls so lange, bis der Sendungskasten 12 eine Information über das Einlegen einer weiteren Sendung erhält. Wenn eine Person eine Sendung 2 zur Abholung hinterlegen will, kann er dies dem Sendungskasten 12 oder einer externen Steuereinrichtung 22 mitteilen. Sodann wird der Sendung 2 ein freies Sendungsfach 14 zugeordnet und das zugehörige vordere Verschlussmittel 18 entriegelt und/oder geöffnet. Ohne dies extra zu erfassen kann so geschlossen werden, dass in dem Sendungsfach 14 eine Sendung 2 hinterlegt worden ist. Es kann aber auch eine Mitteilung des Lieferfahrzeugs 1, etwa anhand der Stellung der Stempeleinheit 9 erfolgen, in welches Sendungsfach 14 eine Sendung 2 eingeschoben wurde, wobei diese Information wiederum an die Steuereinrichtung 16 des Sendungskastens 12 und/oder an die externe Steuereinrichtung 22 weitergegeben werden kann.

Ganz grundsätzlich kann es ausreichen, wenn die Steuereinrichtung des Sendungskastens 16 oder die externe Steuereinrichtung 22 der Steuereinrichtung des Lieferfahrzeugs 4 mitteilt, welche Sendung 2 von welchem Sendungsfach 14 in welches Sendungsfach 14 verschoben werden soll und/oder welche Sendung 2 in welches Sendungsfach 14 abgegeben werden soll. Dann kann das Lieferfahrzeug 1 die entsprechenden Vorgänge steuern, ohne dass das Lieferfahrzeug 1 über die gesamte Belegung des Sendungskastens 12 informiert ist. Dazu empfiehlt es sich jedoch, wenn der Sendungskasten 12 darüber informiert wird, wieviel Sendungen 2 in unterschiedlichen Sendungsfächern 14 abgelegt werden sollen, sei es von dem Lieferfahrzeug 1 selbst oder der externen Steuereinrichtung 22, die Informationen über die Beladung des Lieferfahrzeugs 1 enthalten kann. Die Steuereinrichtung 16 des Sendungskastens 12 kann dann beispielsweise zunächst die seitlichen Verschlussmittel 19 für einen bestimmten Beladeschritt einstellen und sodann den entsprechenden Beladeschritt direkt oder über die externe Steuereinrichtung 22 initiieren. Ist der Beladungsschritt abgeschlossen, kann dies von dem Lieferfahrzeug 1 direkt oder über die externe Steuereinrichtung 22 dem Sendungskasten 12 gemeldet werden. Die Steuereinrichtung 16 des Sendungskastens 12 kann dann die Information betreffend die Beladesituation oder betreffend die Belegung der Sendungsfächer 14 entsprechend aktualisieren, die seitlichen Verschlussmittel 19 bedarfsweise wenigstens teilweise verstellen und einen weiteren von dem Lieferfahrzeug 1 durchzuführenden Beladungsschritt initiieren.

Beim Beladen von Sendungsfächern 12 mit neuen Sendungen 2 oder auch nur beim Verschieben der Sendungen 2 im Sendungskasten 12 sollte auch immer nachgehalten werden, welche individuelle Sendung 2 sich wo befindet, beziehungsweise wohin bewegt worden ist. Es soll nämlich nicht nur eine vollständige Beladung des Sendungskastens 12 möglich sein, sondern auch eine individuelle Abgabe der Sendungen 2 an Abholer 21 sichergestellt werden.

Der Abholer 21 erhält von der Steuereinrichtung 4,16 des Sendungskastens 12 oder des Lieferfahrzeugs 1 oder von der externen Steuereinrichtung 22 einen Zugangscode und bedarfsweise zusätzlich eine Information betreffend den Sendungskasten 12, in dem die Sendung 2 hinterlegt ist, etwa per Mobilfunknetz auf sein Mobiltelefon. Diesen Zugangscode kann der Abholer nun am Bedienfeld 15 des Sendungskastens 12 eingeben oder an die Steuereinrichtung 16 des Sendungskastens 12 diesen übermitteln, was auch über ein Mobilfunknetz erfolgen kann. Dies kann aber beispielsweise auch per Bluetooth oder NFC erfolgen. Sodann öffnet und/oder entriegelt der Sendungskasten 12 das vordere Verschlussmittel 18 des Sendungsfachs 14, in dem sich die dem Zugangscode zugeordnete Sendung 2 befindet.

Die Kommunikation zwischen dem Abholer 21 einerseits und dem Sendungskasten 12 und/oder der externen Steuereinrichtung 22 andererseits kann beispielsweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), erfolgen. Gleiches gilt für die Kommunikation zwischen der externen Steuereinrichtung 22 einerseits und dem Sendungskasten 12 und/oder dem Lieferfahrzeug 1 andererseits. Alternativ oder zusätzlich kann sich die Kommunikation zwischen dem Sendungskasten 12 einerseits und dem Abholer 21 und/oder dem Lieferfahrzeug 1 andererseits auch eines Radio Frequency Identification (RFID) Tags, eines Near Field Communication (NFC) Tags und/oder eines, insbesondere zweidimensionalen, Barcodes bedienen, wobei dann die entsprechenden Lesegeräte zum Auslesen der entsprechenden Information vorhanden sein müssen. Andere Wege der Kommunikation sind ebenfalls denkbar.

Insbesondere im Falle von autonomen Lieferfahrzeugen 1 weisen diese vorzugsweise wenigstens einen Sensor zum Erfassen eines Sendungskastens 12 zum Abliefern von Sendungen 2 in dem Sendungskasten 12 auf. Es kann sich dabei um einen optischen Sensor handeln. Der Sensor ermöglicht es dem Lieferfahrzeug 1, selbstständig bis unmittelbar neben den Sendungskasten 12 zu fahren ohne mit diesem jedoch zu kollidieren. Vorzugsweise kann das Lieferfahrzeug 1 so eine vordefinierte Relativposition zum Sendungskasten 12 einnehmen. Alternativ oder zusätzlich kann das Lieferfahrzeug 1 auch wenigstens einen Sensor zum Erfassen eines Höhenniveaus für das Abliefern von Sendungen 2 durch die Verschiebeeinrichtung 6 aufweisen. Es kann sich hier auch um denselben Sensor handeln wie der Sensor zum Erkennen des Sendungskastens 12. So kann das Lieferfahrzeug 1 die Höhenverstellung der Verschiebeeinrichtung 6 an das erfasste Höhenniveau des Sendungskastens 12 anpassen, wobei es sich um ein Höhenniveau wenigstens eines Sendungsfachs oder einer Reihe 13 von Sendungsfächern 14 handeln kann.

### Bezugszeichenliste

- 1: Lieferfahrzeug
- 2: Sendung
- 3: Sendungsspeicher
- 4: Steuereinrichtung
- 5: Übergabeeinrichtung
- 6: Verschiebeeinrichtung
- 7: Vereinzelungseinrichtung
- 8: Separierungsschwert
- 9: Stempeleinheit
- 10: Rampe
- 11: Schiebetür
- 12: Sendungskasten
- 13: Reihe
- 14: Sendungsfach
- 15: Bedienfeld
- 16: Steuereinrichtung
- 17: vordere Öffnung
- 18: vorderes Verschlussmittel
- 19: seitliches Verschlussmittel
- 20: seitliche Öffnung
- 21: Abholer
- 22: Steuereinrichtung

## Patentansprüche

1. Sendungskasten (12) zur Aufnahme und zum Bereithalten von Sendungen (2) für deren separate Abholung, mit einer Mehrzahl von wenigstens in einer Reihe (13) nebeneinander angeordneten Sendungsfächern (14) jeweils zur Aufnahme wenigstens einer Sendung (2) , wobei wenigstens im Wesentlichen jedes Sendungsfach (14) eine vordere Öffnung (17) aufweist, wobei wenigstens im Wesentlichen jedem Sendungsfach (14) ein zwischen einer die vordere Öffnung (17) zum Entnehmen der Sendung (2) aus dem Sendungsfach (14) freigebenden Entnahmestellung und einer die vordere Öffnung verschließenden Schließstellung verstellbares vorderes Verschlussmittel (18) zugeordnet ist,
wobei wenigstens im Wesentlichen jedes Sendungsfach (14) wenigstens eine seitliche Öffnung (20) aufweist und wobei wenigstens im Wesentlichen jedem Sendungsfach (14) wenigstens ein zwischen einer das wenigstens eine Sendungsfach (14) seitlich verschließenden Verschlussstellung in eine das seitliche Einschieben einer Sendung (2) freigebende Verschiebestellung verstellbares seitliches Verschlussmittel (19) zugeordnet ist,
**dadurch gekennzeichnet, dass**
die Sendungsfächer (14) der wenigstens einen Reihe (13) von Sendungsfächern (14) über seitliche Verschlussmittel (19) voneinander getrennt sind und dass die seitlichen Verschlussmittel (19) von einer seitliche Öffnungen (20) der Sendungsfächer (14) verschließenden Verschlussstellung in eine seitliche Öffnungen (20) der Sendungsfächer (14) freigebende Verschiebestellung derart verstellbar sind, dass in der Verschiebestellung eine direkte Verbindung zwischen den angrenzenden Sendungsfächern (14) zum Verschieben von einer Sendung (2) von einem Sendungsfach (14) in das angrenzenden Sendungsfach (14) besteht.

2. Sendungskasten nach Anspruch 1,
**dadurch gekennzeichnet, dass** die vorderen Verschlussmittel (18) wenigstens im Wesentlichen jeweils als schwenkbare Klappe ausgebildet sind und/oder dass die vorderen Verschlussmittel (18) wenigstens im Wesentlichen jeweils genau einem Sendungsfach (14) zugeordnet sind.

3. Sendungskasten nach einem der Ansprüche 1 oder 2,
**dadurch gekennzeichnet, dass** die seitlichen Verschlussmittel (19) wenigstens im Wesentlichen jeweils wenigstens im Wesentlichen in einer Richtung senkrecht zur wenigstens einen Reihe (13) von Sendungsfächern (14) zwischen der Verschlussstellung und der Verschiebestellung verstellbar ausgebildet sind und/oder dass die seitlichen Verschlussmittel (19) wenigstens im Wesentlichen jedes Sendungsfachs (14) einer Reihe (13) von Sendungsfächern (14) als, insbesondere wenigstens im Wesentlichen eine Seitenwand des Sendungsfachs (14) bildendes, Rolltor ausgebildet sind.

4. Sendungskasten nach einem der Ansprüche 1 bis 3,
**dadurch gekennzeichnet, dass** die Sendungsfächer (14) in wenigstens zwei übereinander angeordneten Reihen (13) von nebeneinander angeordneten Sendungsfächern (14) angeordnet sind und, vorzugsweise, wenigstens in einem Fall zwei übereinander angeordneten Sendungsfächern (14) ein gemeinsames seitlichen Verschlussmittel (19), insbesondere in Form eines Rolltors, zugeordnet ist und/oder dass die Sendungsfächer (14) einer gemeinsamen Reihe (13) von nebeneinander angeordneten Sendungsfächern (14) gleich hoch, gleich breit und/oder gleich tief ausgebildet sind

5. Sendungskasten nach einem der Ansprüche 1 bis 4,
**dadurch gekennzeichnet, dass** die Sendungsfächer (14) unterschiedlicher Reihen (13) von nebeneinander angeordneten Sendungsfächern (14) unterschiedlich hoch, unterschiedlich breit und/oder unterschiedlich tief ausgebildet sind.

6. Sendungskasten nach einem der Ansprüche 1 bis 5,
**dadurch gekennzeichnet, dass** die seitlichen Verschlussmittel (19) elektrisch angetrieben sind und/oder dass eine Steuerungseinrichtung (16) zum Verstellen der seitlichen Verschlussmittel (19) von der Verschlussstellung in die Verschiebestellung und zurück vorgesehen ist und/oder dass eine Steuerungseinrichtung (16) zum Erfassen und/oder Speichern einer Beladesituation vorgesehen ist.

7. Sendungskasten nach einem der Ansprüche 1 bis 6,
**dadurch gekennzeichnet, dass** eine Sendeeinrichtung zum Senden einer Information betreffend eine Beladesituation des Sendungskastens (12) und/oder betreffend der Stellung wenigstens bestimmter seitlicher Verschlussmittel (19) vorgesehen ist und/oder dass eine Empfangseinrichtung zum Empfangen von Steuerbefehlen und/oder Informationen betreffend das Abliefern wenigstens einer Sendung (2) durch ein Lieferfahrzeug (1) in dem Sendungskasten (12) vorgesehen ist.

8. Verfahren zum Abliefern von Sendungen (2) durch ein Lieferfahrzeugin einen Sendungskasten (12) nach einem der Ansprüche 1 bis 7, wobei der Sendungskasten (12) wenigstens eine Reihe (13) von nebeneinander angeordneten Sendungsfächern (14) zur Aufnahme wenigstens einer Sendung (2) aufweist, wobei wenigstens im Wesentlichen jedes Sendungsfach (14) eine vordere Öffnung (17) aufweist und wobei wenigstens im Wesentlichen jedem Sendungsfach (14) ein zwischen einer die vordere Öffnung (17) zum Entnehmen der Sendung (2) aus dem Sendungsfach (14) freigebenden Entnahmestellung und einer die vordere Öffnung verschließenden Schließstellung verstellbares vorderes Verschlussmittel (18) zugeordnet ist,
- bei dem das Lieferfahrzeug (1) seitlich neben dem Sendungskasten (12) hält,
- bei dem eine Steuereinrichtung (4,16,22) wenigstens ein seitliches wenigstens einem Sendungsfach (14) zugeordnetes Verschlussmittel (19) ansteuert,
- bei dem die Ansteuerung des Verschlussmittels (19) in Abhängigkeit der Verteilung der mit Sendungen (2) belegten Sendungsfächer (14) und zum Verstellen des Verschlussmittels (19) von einer eine seitliche Öffnung (20) des wenigstens einen Sendungsfachs (14) verschließenden Verschlussstellung in eine die seitliche Öffnung (20) freigebende Verschiebestellung erfolgt und
- bei dem eine Steuereinrichtung (4) des Lieferfahrzeugs (1) wenigstens eine Verschiebeeinrichtung (6) zum Verschieben einer Sendung (2) in ein Sendungsfach (14) mit geöffneter seitlicher Öffnung (20) ansteuert.

9. Verfahren nach Anspruch 8,
- bei dem das Lieferfahrzeug (1) in Abhängigkeit der Verteilung der mit Sendungen (2) belegten Sendungsfächer (14) seitlich neben einer bestimmten von wenigstens zwei gegenüberliegenden Seiten des Sendungskastens (12) hält.

10. Verfahren nach Anspruch 8 oder 9,
- bei dem das Lieferfahrzeug (1) von der einen Seite des Sendungskastens (12) zur gegenüberliegenden Seite des Sendungskastens (12) fährt und dort seitlich neben dem Sendungskasten (12) hält,
- bei dem an der gegenüberliegenden Seite des Sendungskastens die Steuereinrichtung (4,16,22) wenigstens ein seitliches wenigstens einem Sendungsfach (14) zugeordnetes Verschlussmittel (19) ansteuert,
- bei dem die Ansteuerung des Verschlussmittels (19) in Abhängigkeit der Verteilung der mit Sendungen (2) belegten Sendungsfächer (14) und zum Verstellen des Verschlussmittels (19) von einer eine seitliche Öffnung (20) des wenigstens einen Sendungsfachs (14) verschließenden Verschlussstellung in eine die seitliche Öffnung (20) freigebende Verschiebestellung erfolgt und
- bei dem die Steuereinrichtung (4) des Lieferfahrzeugs (1) die wenigstens eine Verschiebeeinrichtung (6) zum Verschieben einer Sendung (2) in ein Sendungsfach (14) mit geöffneter seitlicher Öffnung (20) ansteuert.

11. Verfahren nach einem der Ansprüche 8 bis 10,
bei dem wenigstens eine Erfassungseinrichtung zum Erfassen des erfolgten Einschiebens der Sendung (2) in das Sendungsfach (14) eine mit dem erfolgten Einschieben der Sendung (2) in das Sendungsfach (14) verbundene Information an eine Steuereinrichtung (4,16,22), insbesondere des Lieferfahrzeugs (1) und/oder des Sendungskastens (12), weiterleitet.

12. Verfahren nach einem der Ansprüche 8 bis 11,
bei dem von einer Steuereinrichtung (16) des Sendungskastens (12) erfasst wird, welche Sendungsfächer (14) mit Sendungen (2) belegt sind und, vorzugsweise, die Steuereinrichtung (16) des Sendungskastens (12) eine Information betreffend wenigstens eines Sendungsfachs (14) mit geöffneter seitlicher Öffnung (20) zum Übernehmen einer Sendung (2) aus dem Lieferfahrzeug (1) und/oder eine Information betreffend die Belegung von Sendungsfächern (14) mit Sendungen (2) weitergibt.

13. Verfahren nach einem der Ansprüche 8 bis 12,
- bei dem zum Übergeben einer Sendung (2) eine Rampe (10) des Lieferfahrzeugs von einer Nichtgebrauchsstellung in eine Gebrauchsstellung verstellt wird,
- bei dem die wenigstens eine zu übergebende Sendung (2) von einem Sendungsspeicher über eine Übergabeeinrichtung (5) an die sich in der Gebrauchsstellung befindliche Rampe (10) abgegeben wird und
- bei dem die Verschiebeeinrichtung (6) die zu übergebende Sendung (2) über die Rampe (10) in ein Sendungsfach (14) des Sendungskastens (12) verschiebt.

14. Verfahren nach einem der Ansprüche 8 bis 13 bei dem die Verschiebeeinrichtung (6), eine Stempeleinheit (9) und/oder eine Rampe (10) zur Anpassung an das Höhenniveau eines Sendungsfachs (14) zum Aufnehmen einer Sendung (2) höhenverstellt wird.

15. Verfahren nach einem der Ansprüche 8 bis 14
bei dem die Steuereinrichtung (16) des Sendungskastens (12) das Entnehmen einer Sendung (2) aus wenigstens einem Sendungsfach (14), insbesondere über eine Information betreffend die Anweisung zum Öffnen und/oder betreffend das Verstellen eines dem Sendungsfach (14) zugeordneten vorderen Verschlussmittels (18) in die Entnahmestellung erfasst und/oder
- bei dem wenigstens eine Sensoreinrichtung eine Sendung (2) in einem Sendungsfach (14) direkt erfasst.

16. Verfahren nach einem der Ansprüche 8 bis 15,
bei dem die Steuereinrichtung (16) des Sendungskastens (12) wenigstens zwei seitliche Verschlussmittel (19) zu beiden Seiten eines eine Sendung (2) aufweisenden Sendungsfachs (14) zum Verstellen von der Verschlussstellung in die Verschiebestellung ansteuert und die Verschiebeeinrichtung (6), insbesondere eine Stempeleinheit (9), die Sendung (2) in dem jeweiligen Sendungsfach (14) durch eine seitliche Öffnung (20) in ein seitlich angrenzendes Sendungsfach (14) verschiebt.

17. Verfahren nach einem der Ansprüche 8 bis 16,
bei dem nacheinander eine Mehrzahl von Sendungen (2) über die Verschiebeeinrichtung (6) des Lieferfahrzeugs (1) an eine entsprechende Mehrzahl von in einer Reihe nebeneinander angeordneten Sendungsfächern (14) übergeben wird und, vorzugsweise, die Steuereinrichtung (4) des Lieferfahrzeugs (1) eine Information betreffend die Zuordnung der übergebenen Sendungen (2) zu den die übergebenden Sendungen (2) aufnehmenden Sendungsfächern (14), insbesondere an eine Steuereinrichtung (16) des Sendungskastens (12), übergibt.

## Claims

1. A consignment box (12) for receiving and holding available consignments (2) for their separate collection, with a plurality of consignment compartments (14) arranged at least in a row (13) next to one another, respectively for receiving at least one consignment (2), wherein at least essentially each consignment compartment (14) has a front opening (17), wherein at least essentially each consignment compartment (14) is associated with a front closure means (18) which is adjustable between a removal position releasing the front opening (17) for removing the consignment (2) from the consignment compartment (14) and a closure position closing the front opening, wherein at least essentially each consignment compartment (14) has at least one lateral opening (20) and wherein at least essentially each consignment compartment (14) is associated with at least one lateral closure means (19) which is adjustable between a closure position laterally closing the at least one consignment compartment (14) and a displacement position releasing the lateral insertion of a consignment (2),
**characterized in that**
the consignment compartments (14) of the at least one row (13) of consignment compartments (14) are separated from one another via lateral closure means (19), and **in that** the lateral closure means (19) are adjustable from a closure position closing lateral openings (20) of the consignment compartments (14) into a displacement position releasing lateral openings (20) of the consignment compartments (14) in such a way that in the displacement position there is a direct connection between the adjacent consignment compartments (14) for displacing an item (2) from one consignment compartment (14) into the adjacent consignment compartment (14).

2. Mail box according to claim 1,
**characterized in that**
the front closure means (18) are at least essentially respectively configured as a pivotable flap and/or that the front closure means (18) are at least essentially respectively assigned to exactly one consignment compartment (14).

3. Mail box according to one of claims 1 or 2,
**characterized in that**
the lateral closure means (19) are configured to be adjustable at least essentially respectively at least essentially in a direction perpendicular to the at least one row (13) of consignment compartments (14) between the closed position and the displacement position and/or that the lateral closure means (19) of at least essentially each consignment compartment (14) of a row (13) of consignment compartments (14) are configured as a roller shutter, in particular forming at least essentially a side wall of the consignment compartment (14).

4. Mail box according to one of claims 1 to 3,
**characterized in that**
the consignment compartments (14) are arranged in at least two rows (13) of consignment compartments (14) arranged one above the other and, preferably, at least in one case a common lateral closure means (19), in particular in the form of a roller shutter, is assigned to two consignment compartments (14) arranged one above the other and/or **in that** the consignment compartments (14) of a common row (13) of consignment compartments (14) arranged one above the other are of the same height, the same width and/or the same depth

5. Mail box according to one of claims 1 to 4,
**characterized in that**
the consignment compartments (14) of different rows (13) of consignment compartments (14) arranged next to one another are of different heights, different widths and/or different depths.

6. Mail box according to one of claims 1 to 5,
**characterized in that**
the lateral closure means (19) are electrically driven and/or that a control device (16) is provided for adjusting the lateral closure means (19) from the closure position into the displacement position and back and/or that a control device (16) is provided for detecting and/or storing a loading situation.

7. Mail box according to one of claims 1 to 6,
**characterized in that**
a transmitting device is provided for transmitting information relating to a loading situation of the consignment box (12) and/or relating to the position of at least certain lateral closure means (19) and/or that a receiving device is provided for receiving control commands and/or information relating to the delivery of at least one consignment (2) by a delivery vehicle (1) into the consignment box (12).

8. Method for delivering consignments (2) by a delivery vehicle into a consignment box (12) according to one of claims 1 to 7, wherein the consignment box (12) comprises at least one row (13) of consignment compartments (14) arranged next to one another for receiving at least one consignment (2), wherein at least essentially each consignment compartment (14) has a front opening (17) and wherein at least essentially each consignment compartment (14) is associated with a front closure means (18) which is adjustable between a removal position releasing the front opening (17) for removing the consignment (2) from the consignment compartment (14) and a closure position closing the front opening,
- in which the delivery vehicle (1) stops laterally next to the consignment box (12),
- in which a control device (4, 16, 22) controls at least one lateral closure means (19) associated with at least one consignment compartment (14),
- in which the control of the closure means (19) takes place as a function of the distribution of the consignment compartments (14) occupied by consignments (2) and for adjusting the closure means (19) from a closure position closing a lateral opening (20) of the at least one consignment compartment (14) into a displacement position releasing the lateral opening (20), and
- in which a control device (4) of the delivery vehicle (1) controls at least one displacement device (6) for displacing an item (2) into a consignment compartment (14) with an open lateral opening (20).

9. Method according to claim 8,
- in which the delivery vehicle (1) stops laterally next to a certain of at least two opposite sides of the consignment box (12) as a function of the distribution of the consignment compartments (14) occupied by consignments (2).

10. Method according to claim 8 or 9,
- in which the delivery vehicle (1) moves from one side of the consignment box (12) to the opposite side of the consignment box (12) and stops there laterally next to the consignment box (12),
- in which the control device (4, 16, 22) on the opposite side of the consignment box controls at least one lateral closure means (19) associated with at least one consignment compartment (14),
- in which the control of the closure means (19) is effected as a function of the distribution of the consignment compartments (14) occupied by consignments (2) and for moving the closure means (19) from a closure position closing a lateral opening (20) of the at least one consignment compartment (14) into a displacement position releasing the lateral opening (20), and
- in which the control device (4) of the delivery vehicle (1) controls the at least one displacement device (6) for displacing an item (2) into a consignment compartment (14) with an open lateral opening (20).

11. Method according to one of claims 8 to 10,
in which at least one detection device for detecting the performed insertion of the consignment (2) into the consignment compartment (14) forwards information associated with the performed insertion of the consignment (2) into the consignment compartment (14) to a control device (4, 16, 22), in particular of the delivery vehicle (1) and/or of the consignment box (12).

12. Method according to any one of claims 8 to 11,
in which a control device (16) of the consignment box (12) detects which consignment compartments (14) are occupied by consignments (2) and,
preferably, the control device (16) of the consignment box (12) passes on information relating to at least one consignment compartment (14) with an open side opening (20) for accepting a consignment (2) from the delivery vehicle (1) and/or information relating to the occupancy of consignment compartments (14) with consignments (2).

13. Method according to any one of claims 8 to 12,
- in which a ramp (10) of the delivery vehicle is moved from a non-use position to a use position in order to transfer a consignment (2),
- in which the at least one consignment (2) to be transferred is delivered from a consignment storage via a transfer device (5) to the ramp (10) located in the use position, and
- in which the displacement device (6) displaces the item (2) to be transferred via the ramp (10) into a consignment compartment (14) of the item box (12).

14. Method according to any one of claims 8 to 13
in which the displacement device (6), a stamp unit (9) and/or a ramp (10) is adjusted in height to adapt to the height level of a consignment compartment (14) for receiving a consignment (2).

15. Method according to any one of claims 8 to 14
in which the control device (16) of the consignment box (12) detects the removal of a consignment (2) from at least one consignment compartment (14), in particular via information relating to the instruction for opening and/or relating to the displacement of a front closure means (18) assigned to the consignment compartment (14) into the removal position, and/or
- in which at least one sensor device directly detects an item (2) in a consignment compartment (14).

16. Method according to any one of claims 8 to 15,
in which the control device (16) of the consignment box (12) actuates at least two lateral closure means (19) on both sides of a consignment compartment (14) having a consignment (2) for displacement from the closure position into the displacement position and the displacement device (6), in particular a stamp unit (9), displaces the consignment (2) in the respective consignment compartment (14) through a lateral opening (20) into a laterally adjacent consignment compartment (14).

17. The method according to any one of claims 8 to 16,
in which a plurality of consignments (2) are transferred one after another via the displacement device (6) of the delivery vehicle (1) to a corresponding plurality of consignment compartments (14) arranged next to one another in a row and,
preferably, the control device (4) of the delivery vehicle (1) transfers information relating to the assignment of the transferred consignments (2) to the consignment compartments (14) receiving the consignments (2) being transferred, in particular to a control device (16) of the consignment box (12).

## Revendications

1. Boîte d'envoi (12) pour recevoir et tenir à disposition des envois (2) pour leur enlèvement séparé, comprenant une pluralité de compartiments d'envoi (14) disposés les uns à côté des autres au moins dans une rangée (13), respectivement destiné à recevoir au moins un envoi (2), où au moins essentiellement chaque compartiment d'envoi (14) a une ouverture avant (17), un moyen de fermeture avant (18) réglable entre une position de prélèvement libérant l'ouverture avant (17) pour un prélèvement de l'envoi (2) hors du compartiment d'envoi (14) et une position de fermeture fermant l'ouverture avant est associé au moins essentiellement à chaque compartiment d'envoi (14), où au moins essentiellement chaque compartiment d'envoi (14) a au moins une ouverture latérale (20) et où au moins essentiellement chaque compartiment d'envoi (14) est associé à au moins un moyen de fermeture latéral (19) réglable entre une position de fermeture fermant latéralement le au moins un compartiment d'envoi (14) et une position de coulissement libérant l'insertion latérale d'un envoi (2),
**caractérisé en ce que**
les compartiments d'envoi (14) de la au moins une rangée (13) de compartiments d'envoi (14) sont séparés les uns des autres par des moyens de fermeture latéraux (19) et que les moyens de fermeture latéraux (19) sont réglables d'une position de fermeture fermant des ouvertures latérales (20) des compartiments d'envoi (14) à une position de déplacement libérant des ouvertures latérales (20) des compartiments d'envoi (14) de telle sorte, que dans la position de déplacement, il existe une connexion directe entre les compartiments d'envoi (14) adjacents pour un déplacement d'un envoi (2) d'un compartiment d'envoi (14) dans le compartiment d'envoi (14) adjacent.

2. Boîte d'envoi selon la revendication 1,
**caractérisé en ce que**
les moyens de fermeture avant (18) sont réalisés au moins essentiellement respectivement sous forme de volet pivotant et/ou que les moyens de fermeture avant (18) sont associés au moins essentiellement respectivement exactement à un compartiment d'envoi (14).

3. Boîte d'envoi selon l'une des revendications 1 ou 2,
**caractérisé en ce que**
les moyens de fermeture latéraux (19) sont réalisés au moins essentiellement chacun au moins essentiellement dans une direction perpendiculaire à la au moins une rangée (13) de boîtes d'envoi (14) de manière déplaçable entre la position de fermeture et la position de déplacement et/ou que les moyens de fermeture latéraux (19) d'au moins essentiellement chaque boîte d'envoi (14) d'une rangée (13) de boîtes d'envoi (14) sont réalisés sous forme d'une porte roulante, en particulier formant au moins essentiellement une paroi latérale de la boîte d'envoi (14).

4. Boîte d'envoi selon l'une des revendications 1 à 3,
**caractérisé en ce que**
les compartiments d'envoi (14) sont disposés en au moins deux rangées (13) superposées de compartiments d'envoi (14) disposés les uns à côté des autres et, de préférence, dans au moins un cas, un moyen de fermeture latéral commun (19), en particulier sous la forme d'une porte roulante, est associé à deux compartiments d'envoi (14) disposés les uns au-dessus des autres et/ou que les compartiments d'envoi (14) d'une rangée commune (13) de compartiments d'envoi (14) disposés les uns à côté des autres sont réalisés avec une même hauteur, une même largeur et/ou une même profondeur.

5. Boîte d'envoi selon l'une des revendications 1 à 4,
**caractérisé en ce que**
les compartiments d'envoi (14) de différentes rangées (13) de compartiments d'envoi (14) disposés les uns à côté des autres sont de hauteur, de largeur et/ou de profondeur différentes.

6. Boîte d'envoi selon l'une des revendications 1 à 5,
**caractérisé en ce que**
les moyens de fermeture latéraux (19) sont entraînés électriquement et/ou qu'un dispositif de commande (16) est prévu pour déplacer les moyens de fermeture latéraux (19) de la position de fermeture à la position de déplacement et inversement et/ou qu'un dispositif de commande (16) est prévu pour détecter et/ou enregistrer une situation de chargement.

7. Boîte d'envoi selon l'une des revendications 1 à 6,
**caractérisé en ce que**
un dispositif d'émission est prévu pour émettre une information concernant une situation de chargement de la boîte d'envoi (12) et/ou concernant la position d'au moins certains moyens de fermeture latéraux (19) et/ou qu'un dispositif de réception est prévu pour recevoir des ordres de commande et/ou des informations concernant la livraison d'au moins un envoi (2) par un véhicule de livraison (1) dans la boîte d'envoi (12).

8. Méthode de livraison d'envois (2) par un véhicule de livraison dans une boîte 'envoi (12) selon l'une des revendications 1 à 7, où la boîte à envois (12) comprend au moins une rangée (13) de compartiments d'envois (14) disposés côte à côte pour recevoir au moins un envoi (2), dans lequel au moins essentiellement chaque compartiment d'envoi (14) a une ouverture avant (17) et où au moins essentiellement chaque compartiment d'envoi (14) est associé à un moyen de fermeture avant (18) déplaçable entre une position de retrait libérant l'ouverture avant (17) pour retirer l'envoi (2) du compartiment d'envoi (14) et une position de fermeture obturant l'ouverture avant,
- dans lequel le véhicule de livraison (1) s'arrête latéralement à côté du boîte d'envoi (12),
- dans lequel un dispositif de commande (4, 16, 22) commande au moins un moyen de fermeture (19) latéral associé à au moins un compartiment d'envoi (14),
- dans lequel la commande du moyen de fermeture (19) s'effectue en fonction de la répartition des boîtes d'envoi (14) occupés par des envois (2) et pour le déplacement du moyen de fermeture (19) d'une position de fermeture fermant une ouverture latérale (20) du au moins un boîte d'envoi (14) dans une position de déplacement libérant l'ouverture latérale (20) et
- dans lequel un dispositif de commande (4) du véhicule de livraison (1) commande au moins un dispositif de déplacement (6) pour déplacer un envoi (2) dans un compartiment d'envoi (14) avec une ouverture latérale (20) ouverte.

9. Méthode selon la revendication 8,
- dans lequel le véhicule de livraison (1) s'arrête latéralement à côté d'un côté déterminé d'au moins deux côtés opposés de la boîte d'envoi (12) en fonction de la répartition des compartiments d'envoi (14) occupés par des envois (2).

10. Méthode selon la revendication 8 ou 9,
- dans lequel le véhicule de livraison (1) se déplace d'un côté de la boîte d'envoi (12) vers le côté opposé de la boîte d'envoi (12) et s'y arrête latéralement à côté de la boîte d'envoi (12),
- dans lequel, sur le côté opposé de la boîte d'envoi, le dispositif de commande (4, 16, 22) commande au moins un moyen de fermeture (19) latéral associé à au moins un compartiment d'envoi (14),
- dans lequel la commande du moyen de fermeture (19) s'effectue en fonction de la répartition des boîtes d'envoi (14) occupés par des envois (2) et pour le déplacement du moyen de fermeture (19) d'une position de fermeture fermant une ouverture latérale (20) du au moins une boîte d'envoi (14) dans une position de déplacement libérant l'ouverture latérale (20) et
- dans lequel le dispositif de commande (4) du véhicule de livraison (1) commande l'au moins un dispositif de déplacement (6) pour déplacer un envoi (2) dans un compartiment d'envoi (14) avec une ouverture latérale (20) ouverte.

11. Méthode selon l'une des revendications 8 à 10,
dans lequel au moins un dispositif de détection de l'introduction réussie de l'envoi (2) dans le compartiment d'envoi (14) transmet une information liée à l'introduction réussie de l'envoi (2) dans le compartiment d'envoi (14) à un dispositif de commande (4, 16, 22), notamment du véhicule de livraison (1) et/ou de la boîte d'envoi (12).

12. Méthode selon l'une des revendications 8 à 11,
dans lequel un dispositif de commande (16) de la boîte à envois (12) détecte quels boîtes à envois (14) sont occupés par des envois (2) et, de préférence, le dispositif de commande (16) de la boîte à envois (12) transmet une information concernant au moins un boîte à envois (14) avec une ouverture latérale (20) ouverte pour prendre un envoi (2) du véhicule de livraison (1) et/ou une information concernant l'occupation de boîtes à envois (14) par des envois (2).

13. Méthode selon l'une des revendications 8 à 12,
- dans lequel, pour transférer un envoi (2), une rampe (10) du véhicule de livraison est déplacée d'une position de non-utilisation à une position d'utilisation,
- dans lequel l'au moins un envoi (2) à transférer est délivré par un magasin d'envois via un dispositif de transfert (5) à la rampe (10) se trouvant dans la position d'utilisation et
- dans lequel le dispositif de déplacement (6) déplace l'envoi à transférer (2) via la rampe (10) dans un compartiment d'envoi (14) de la boîte d'envoi (12).

14. Méthode selon l'une des revendications 8 à 13
dans lequel le dispositif de déplacement (6), une unité de cachet (9) et/ou une rampe (10) sont réglés en hauteur pour s'adapter au niveau de hauteur d'un compartiment d'envoi (14) destiné à recevoir un envoi (2).

15. Méthode selon l'une des revendications 8 à 14
dans lequel le dispositif de commande (16) de la boîte d'envoi (12) détecte le prélèvement d'un envoi (2) dans au moins un compartiment d'envoi (14), en particulier par intermédiaire d'une information concernant l'instruction d'ouverture et/ou concernant le déplacement d'un moyen de fermeture avant (18) associé au compartiment d'envoi (14) dans la position de prélèvement et/ou
- dans lequel au moins un dispositif de détection détecte directement un envoi (2) dans un compartiment d'envoi (14).

16. Méthode selon l'une des revendications 8 à 15,
dans lequel le dispositif de commande (16) de la boîte d'envoi (12) commande au moins deux moyens de fermeture latéraux (19) de part et d'autre d'un compartiment d'envoi (14) ayant un envoi (2) pour le faire passer de la position de fermeture à la position de déplacement et le dispositif de déplacement (6), en particulier une unité de cachet (9), déplace l'envoi (2) dans le compartiment d'envoi respectif (14) à travers une ouverture latérale (20) dans un compartiment d'envoi (14) adjacent latéralement.

17. Méthode selon l'une des revendications 8 à 16,
dans lequel une pluralité d'envois (2) est transférée successivement par intermédiaire du dispositif de déplacement (6) du véhicule de livraison (1) à une pluralité correspondante de boîtes à envois (14) disposés côte à côte dans une rangée et, de préférence, le dispositif de commande (4) du véhicule de livraison (1) transmet une information concernant l'association des envois (2) transférés aux boîtes à envois (14) recevant les envois (2) transférés, en particulier à un dispositif de commande (16) de la boîte à envois (12).
